# EUROPEAN PATENT APPLICATION

(11) **EP 3 651 406 A2**
(43) Date of publication of application: **13.05.2020**
(21) Application number: 18829093.6
(22) Date of filing: 03.07.2018
(51) Int. Cl.: H04L 9/16, G09C 1/00, H04L 9/32

(54) **FIRST COMMUNICATION DEVICE, SECOND COMMUNICATION DEVICE, METHOD, AND COMPUTER PROGRAM**

(30) Priority: 03.07.2017 JP 2017130407; 14.09.2017 JP 2017177056
(71) Applicant: NTI, Inc., Yokkaichi-shi Mie 510-8021 (JP)
(72) Inventor: NAKAMURA, Takatoshi, Yokkaichi-shi Mie 510-8021 (JP)
(74) Representative: Gill Jennings & Every LLP
(86) International application number: PCT/JP2018/025163
(87) International publication number: WO 2019/009275

(57) **Abstract**

Technology is provided that replaces block chains, is capable of saving accumulated data, and has low cost. A user terminal 100-1 encrypts target data (S804), and sends the data to a user terminal 100-2 (S805). The user terminal 100-2 receives the data (S901), and further encrypts the encrypted target data (S902). The user terminal 100-2 records the double-encrypted target data (S903), and transmits the data to the user terminal 100-1 (S904). The user terminal 100-1 receives the data (S806), and records the double-encrypted target data (S807).

## Description

### Technical Field

The present invention relates to a technology that can record data without falsification and replaces block chains.

### Background Art

In recent years, expectation for block chain and its applied technology has been raised. It has been pointed out that application of block chain can create new services having not been present before, for example, in a fintech field related to settlement, remittance and the like, an authentication field encompassing personal authentication and appraisals of art, a medical field on management of medication profiles and the like, and a public field encompassing votes for elections and the like.

Although block chain is even called a visionary technology in some senses, the drawbacks have recently begun to be pointed out.

First, the structure of a block chain is described, while the structure of bitcoin (trademark), which is the best-known application target of block chain, is described.

Bitcoin is called a virtual currency. Bitcoin began with a thesis published by someone using the name Satoshi Nakamoto and is realized by a system constructed on the Internet. The structure of Bitcoin is as described below.

First, bitcoin is generated as follows.

A person who has the right to generate bitcoins is limited to an administrator who manages nodes to be described below (typically called "miner"). The node administrator participates in a certain type of game played on the Internet. The game is repeated, and the node administrator, who has won the game, can obtain a predetermined number of bitcoins every time the administrator wins the game.

The bitcoins generated in this way are transferred to a third party including a person other than the node administrator from the node administrator who obtains the bitcoins, for example, for "payment" in the same manner as general currency, and will be distributed one after another as a result.

By the way, how to prevent double transfer is a very important issue in the field of virtual currency or virtual money without being limited to bitcoin. Since general money, which is a tangible object, disappears from the transferor's hands when transferred from the transferor to the transferee, after the transferor transfers the money to the transferee, it is not possible for the transferor to transfer the same money to another transferee in principle. However, since the virtual currency is easy to duplicate and it is possible that the virtual currency as data owned by the transferor is not extinguished even when the transferor transfers the virtual currency to the transferee, it is very easy to transfer the same virtual currency to many people. Unless the same virtual currency can be prevented from being transferred to many people, such virtual currency cannot gain any trust as currency.

Bitcoin intends to solve such a problem of double transfer through a method of preserving all transaction records. The transaction records are as follows, for example. For simplicity, it is assumed that only four persons A to D participate in the structure of bitcoin and the node administrators are only two persons A and B. Assuming that the node administrator A wins the above-described game and gains 1,000 bitcoins, and the node administrator B wins the above-described game and gains 500 bitcoins.

In this state, A to D respectively have bitcoins described as follows.

**[Table 1]**

| | |
|---|---|
| A | +1000 |
| B | +500 |
| C | 0 |
| D | 0 |

Next, assuming that A has paid 100 bitcoins to C and B has paid 200 bitcoins to D.

In this state, A to D respectively have bitcoins described as follows.

**[Table 2]**

| | | |
|---|---|---|
| A | +1000 | -100 (to C) |
| B | +500 | -200 (to D) |
| C | 0 | +100 (from A) |
| D | 0 | +200(from B) |

Next, assuming that A has paid 300 bitcoins to B and D has paid 100 bitcoins to C.

In this state, A to D respectively have bitcoins described as follows.

**[Table 3]**

| | | | |
|---|---|---|---|
| A | +1000 | -100 (to C) | -300 (to B) |
| B | +500 | -200 (to D) | +300 (from A) |
| C | 0 | +100 (from A) | +100 (from D) |
| D | 0 | +200 (from B) | -100 (to C) |

All of the records indicated in Tables 1 to 3 described above are transaction records. According to the transaction records described above, it can be seen at the time of Table 3 that A has bitcoins of 600 (= +1000 - 100 - 300), B similarly has bitcoins of 600, C has bitcoins of 200, and D has bitcoins of 100.

The bitcoin having such a structure is interesting in that some data as a main body of bitcoin is not delivered from the transferor to the transferee in the transfer of bitcoin between A to D in the example described above. In spite of this, attraction of the bitcoin structure is to specify the current balance of bitcoin of A to D as long as the transaction records exist.

Note that the phenomenon that the node administrator in the bitcoin structure wins the game and gains bitcoins can occur after the transaction is advanced to some extent, for example, after the time of Table 3.

In the bitcoin structure, as described above, each participant who participates in the bitcoin structure does not have data corresponding to his/her bitcoin. In other words, even though each participant's wallet is empty, since all past transaction records exist so as to be accessible and the balance of bitcoin at that time is specified in this way from the access record, the bitcoin structure is established based on mutual understanding or common illusion that the bitcoin of each participant should be like this.

For that reason, in order for all participants to believe in the common illusion, it is necessary to guarantee that the transaction record is valid or the transaction record cannot be falsified. One type of technology enabling this is block chain.

According to the bitcoin technology, the legitimacy of transaction records is guaranteed by the block chain and the technology and idea of proof-of-work.

The transaction records of bitcoin have a structure in which new transaction records are linked to previous transaction records. As new transaction record data (blocks) is continuously linked to the past transaction records, the transaction record data is linked in the form of a chain of blocks. This is called a block chain. When a new block to be added to the block chain is generated, a value obtained by encryption of the immediately previous block (more precisely, a hash value created from the data on the immediately previous block) is added to the new block. Thus, if the past block is falsified after the time when the new block is added to the block chain, the hash value is changed and the falsification is detected, and thus the data on the past block created previously cannot be falsified in actual fact.

In addition, block chain data is recorded in a server called a node, which exists in large numbers on the Internet. The same block chain data is recorded in each of the nodes. According to the block chain, this is called data distributed management or the like. By the way, data distributed management in technology other than block chain means, typically, technology where different data items (parts of the entire data) are saved in many devices such that certain data items (for example, 1 to 100 data items) exist, 1 to 10 data items are recorded in an X device, 11 to 70 data items are recorded in a Y device, and 71 to 100 data items are recorded in a Z device. The reason is unknown, but in the technical field of block chain, recording the same data in many nodes is called distributed management. However, what the many nodes perform for block chain is only a mirroring process.

In the bitcoin technology, there are many block chains recorded in many nodes, as described above. In principle, unless it is guaranteed that all of many block chains are the same, a doubt arises about the authenticity of transaction records, thus largely degrading the reliability of bitcoin.

Accordingly, when a new block is added to the end of an already existing block chain, many node administrators should be prevented from performing the addition by their own ways. What is used as a scheme of limiting, to one party, the party of adding a new block to the end of a block chain, is the aforementioned game in which the node administrators participate. A structure using this game is called proof-of-work in the world of bitcoin. As described above, the node administrator can participate in a certain type of game, and can gain bitcoins if he/she wins the game. Furthermore, if the administrator wins the game, he/she gains a right of adding a block of a new transaction record to the past transaction records. The other node administrators losing the game copy the block of the new transaction record to the end of the block chain recorded in the node the administrator manages, thus adding the block. As described above, a rule is created where the number of parties allowed to add the new block to the node is limited to only one, and all the node administrators add the same block as the new block to the end of the block chain. Correct operation of the rule achieves a state where many block chains residing in many nodes are the same.

With the structure described above, since the block chain recorded in each node cannot be falsified by the hash value or the hash value is changed when the falsification is made, the evidence of falsification is detected. In other words, when attention is focused on a certain block chain, data on each block cannot be falsified.

Even when some of the block chains recorded in each node are falsified in the same manner also concerning the hash value (for example, even when some of the block chains recorded in multiple nodes are also falsified in the same manner) so that the falsification of the past block data is not detected, if a large number of non-falsified block chains exist out of the block chains recorded in a large number of nodes, these are regarded to be true to thereby nullifying the falsification of the past block data also concerning the hash value of the past block. In actuality, the bitcoin block chains adopt such a theory of majority rule. Accordingly, the legitimacy of the block chains in bitcoin is guaranteed even with no centralized block chain administrator. As described above, the node administrator can obtain bitcoins as a reward by winning the game (in actuality, there is another reward). Motivated by this, the node administrators improve the computing power of their computers. In order for a malicious third party to falsify a majority of the block chains recorded in the node, it is necessary to prepare a computer having computing power of at least half of the sum of the computing power of many computers of the node administrators. It is said that the number of nodes (more precisely, the number of servers constituting the nodes) has already exceeded ten million according to a certain estimate. The parties participating in the bitcoin structure trust an assumption that the computer having such computing power cannot be prepared in actual fact. Such trust or confidential relationship guarantees the legitimacy of not only the block chain but also the transaction record, and gives a certain kind of trust to the bitcoin.

### Summary of Invention

### Technical Problem

Bitcoin and the structure of block chains applied thereto are generally as described above.

The structure described above prevents each block chain from being falsified. Even in case some of many block chains are falsified, the falsification is ignored, and valid block chains are correctly treated as valid ones. Briefly speaking, the block chain is technology for saving recorded data in an unfalsifiable manner.

However, it is enormously wasteful to continue to record the same data in many nodes, only for the sake of saving data recorded in an unfalsifiable manner. In strong words, it is foolish. It can be said that the amount of data of block chains recorded in each node of block chains of bitcoin already exceeded 90 TB last year. The more the amount of bitcoin transaction increases, the further enormously the amount of data increases. It is often said that the block chain is democratic technology without any centralized administrator. It can be said that such waste is a drawback that dims the advantages.

It is often said that block chain technology has a low cost. This is an advantage only achieved if the cost spontaneously incurred by a node administrator of a block chain is not concerned. If each of many nodes should continue to record the same enormous data, the cost cannot be low.

Anyone having cost and technical capabilities for preparing the node can become an administrator of a bitcoin node. On the contrary of such open public block chains, what is called private block chains that allow only a smaller number of persons having a certain status to become node administrators and are closed to the outside, have recently been proposed.

However, if persons having a certain status have a trusting relationship with each other, it is sometimes wasteful to use many nodes. In the case of a private block chain, the cost for constructing and maintaining a node is directly incurred by the administrator and the like. Accordingly, the cost burden naturally becomes heavy. According to such discussion, a doubt arises about the advantages of the technology called private block chains in the first place.

The invention of the present application has an object to provide technology that is for saving recorded data in an unfalsifiable manner, and has a lower operation cost than a block chain.

### Solution to Problem

In order to solve such a problem, the inventor of the present application proposes the invention to be described below.

The invention of the present application is a method executed by a plurality of communication devices that are communicable with each other via a predetermined network, each of the devices including an encryption unit configured to be capable of encrypting predetermined data in a decryptable manner according to a method different from methods of the other devices, one of the devices holding target data that is data all of users of the devices intend to save.

Such a method includes: an encryption step of causing all the communication devices to transmit and receive the target data or data obtained by encrypting the target data, to or from each other via the network, while causing the encryption units included in the communication devices to encrypt the data one after another; and a sharing step of causing all the communication devices to share the target data encrypted by all the encryption units of the communication devices, by transmitting and receiving the data via the network.

Such a method is significantly simple. The minimal configuration in a case of executing such an invention only includes two communication devices communicable with each other via a network. Note that these two communication devices are required to include encryption units capable of encrypting data in a decryptable manner. Here, the encryption units included in the two communication devices can perform encryption according to respective methods different from each other (for example, according to different algorithms, or different keys).

When the method of the invention of the present application is executed by the two communication devices, data to be saved is target data that is data users of the two communication devices intend to save. A single user recording and saving certain data owned by the user only requires that each user records by himself/herself, and does not change the data by himself/herself. On the other hand, typically in the block chain of bitcoin described above, data required to be recorded and saved in a state of being prevented from falsified is data on which multiple users conflict with each other in case of falsification, in many cases. As for the bitcoin transaction record, a transferor of bitcoins has an honest intention of falsifying the transaction record such that the number of transferred bitcoins is as small as possible, while a transferee of the bitcoins has an honest intention of falsifying the transaction record such that the number of transferred bitcoins is as large as possible. Data on such an event where multiple users conflict with each other is a typical example of the target data in the invention of the present application.

When the method of the invention of the present application is executed between the two communication devices, one target data item is encrypted by the encryption units of the two communication devices one after another. In this case, the encryption is performed irrespective of which communication device causes its encryption unit to encrypt the target data first. If only one of the two communication devices holds the target data, typically, the encryption unit of the communication device holding the target data encrypts the target data first. Alternatively, the target data may be transmitted first from one communication device holding the target data to the other communication device holding no target data, and the target data may be encrypted by the encryption unit of the other communication device having received the data. In any case, the communication device having first encrypted the target data through its encryption unit transmits the encrypted target data to the other communication device. The communication device having received the data further encrypts the target data through its encryption unit. As for the data generated through sequential encryption by the encryption units of the two communication devices, encryption methods performed by the encryption units of the two communication devices are different from each other. Accordingly, not only a third party cannot decrypt the data, but also any of the two communication devices can no longer decrypt the data solely. However, when the users of the two communication devices intend to verify the content of the target data later, the target data encrypted by the two encryption units can be restored to the original plaintext target data by decrypting the encrypted target data by, for example, the encryption units of the two communication devices (it is a matter of course that the encryption units of the two communication devices may be dedicated to encryption, while decryption units of decrypting data encrypted by the encryption unit of the communication device may be included separately) sequentially (typically, in an inverted order of the encryption order). That is, the data generated by encryption sequentially by the encryption units of the two communication devices through cooperation of the two communication devices can be restored to the plaintext target data any time when the two communication devices or the users cooperate. On the contrary, in case the data is falsified, the data cannot be restored to the plaintext target data. Accordingly, the fact of falsification can become evident. Consequently, falsification cannot be practically made.

In a case where two communication devices execute the invention of the present application, the target data is shared by transmitting, from one to the other, data generated by at least the two devices sequentially encrypting through the encryption units of the two communication devices. Accordingly, without use of any block chain, data can be recorded in an unfalsifiable state. It is a matter of course that the cost required for the method executed only by the two communication devices is much lower than that in a case of achieving the block chain. In particular, for the block chain used for Bitcoin, the time period required to generate a new block and record the new data is long (for example, about ten minutes). However, in the invention of the present application, the time period required for the execution is generally shorter.

In the above description, it is assumed that the number of communication devices is two. Alternatively, the number of communication devices in the invention of the present application may be three or more. That is, the invention of the present application includes multiple communication devices. The target data in this case is data all of the users of the communication devices save. These communication devices include the encryption units as described above, and these encryption units can encrypt certain data according to the respective methods different from each other. Similar to the case of two communication devices, the target data is encrypted by all the encryption units included in these communication devices one after another. The target data encrypted by the encryption units of all the communication devices is shared among all the communication devices. Accordingly, the communication devices can record data in an unfalsifiable state without use of any block chain. It is a matter of course that the larger the number of communication devices is, the time period required for this process increases accordingly. However, the time period is typically shorter than a time period required to record data in a block chain.

As described above, the method according to the invention of the present application includes an encryption step of causing the encryption units of these communication devices to encrypt, one after another, the target data that is data all of the users of the communication devices intend to save. On the other hand, what encrypts the target data one after another in the encryption step according to the method of the invention of the present application is not limited to the communication device of the user intending to save the target data.

In the encryption step according to the invention of the present application, all of one or more auxiliary communication devices, and all of the communication devices may transmit and receive the target data or data obtained by encrypting the target data, to or from each other via the network, while the encryption units included in the communication devices and auxiliary encryption units included in all the auxiliary communication devices may encrypt the data one after another, the auxiliary communication devices being communicable with each other via the network, and each including the auxiliary encryption unit capable of encrypting predetermined data in a decryptable manner according to a method that is different from methods of the other auxiliary communication devices and is also different from the methods of the encryption units of the communication devices.

Unlike the user serving as, typically, a party concerned having an interest to the content of the target data, the user of the auxiliary communication device including the auxiliary encryption unit may have no relationship with the content of the target data. The communication device and the auxiliary communication device may be completely the same in the hardware, software, functions and the like. Participation of the auxiliary communication device other than the communication device in encryption of the target data in the encryption step can further safely save the finally obtained multi-encrypted target data. The number of auxiliary communication devices may be one or more. For example, the auxiliary communication device may be a communication device of a notary public or the like whose fairness is confirmed. The order of encrypting the target data by the encryption unit of the communication device and the auxiliary encryption unit of the auxiliary communication device is freely determined. Note that in this case, the finally obtained multi-encrypted target data can be decrypted by cooperation of all the communication devices and all the auxiliary communication devices that participate in the encryption step.

In the case where the auxiliary communication device participates in the encryption step, the finally obtained multi-encrypted target data may be shared only by the communication device, as described above. Not only the communication device but also the auxiliary communication device may share the finally obtained multi-encrypted target data. For example, in the sharing step, all the communication devices and at least one of the auxiliary communication devices may share the target data encrypted by all the encryption units of the communication devices, by transmitting and receiving the data via the network.

In a case where no auxiliary communication device participates in the encryption step, the method of the invention of the present application may further include a recording step of causing one of the communication devices to transmit the target data encrypted by all the encryption units of the communication devices to a recording device that is connected to the network and is capable of recording data, and causing the recording device to record the target data encrypted by all the encryption units of the communication devices.

In the case where no auxiliary communication device participates in the encryption step, the multi-encrypted target data is shared by all the communication devices in principle, as described above. Accordingly, the multi-encrypted target data recorded in each communication device cannot be falsified, or is in a state where falsification is found in case the data is falsified. There is, however, a possibility that the multi-encrypted target data recorded in each communication device is erased or lost, for example. In preparation for this, the multi-encrypted target data may be sent from the communication device to an external recording device, and recorded in the recording device, thereby achieving safety because a backup exists. The number of residing recording devices may be more than one. If the multi-encrypted target data is recorded in the multiple recording devices, falsification of such data becomes further difficult. This is similar to a case where many nodes are prepared for the block chain in a bitcoin system, and the same block chain is recorded in many nodes. However, according to the block chain structure, the system is configured such that the number of many nodes certifies the authenticity of the block chain. In view that the nodes is destined to increase, the number of recording devices required in the invention of the present application is limited. In the case of multiple recording devices, multiple (or many) multi-encrypted target data items are recorded in each recording device as time elapses. In this case, the multi-encrypted target data items recorded in each recording device are not necessarily the same. For example, it is assumed that the multi-encrypted target data items generated up to a certain time are 1 to 100, which are 100 items, and the recording devices are recording devices 1 to 5, which are four devices; a state is allowed where the multi-encrypted target data items 1 to 100 are recorded in the recording device 1, the multi-encrypted target data items 1 to 50 are recorded in the recording device 2, the multi-encrypted target data items 40 to 90 are recorded in the recording device 3, the even-numbered multi-encrypted target data items are recorded in the recording device 4, and the odd-numbered multi-encrypted target data items are recorded in the recording device 5. The conventional block chain requires that the entire data on the block chain is recorded in all the nodes in principle, which enhances enormous increase in the amount of data recorded in the nodes. However, the method in the invention of the present application is unlikely to cause such an adverse effect.

The recording step can record, in the recording device, the target data encrypted by all the encryption units of the communication devices. In addition to the encrypted target data, the target data (plaintext) that is the origin of the target data may be recorded in the recording device. Accordingly, the content of the encrypted target data can be verified without decrypting the encrypted target data. This is useful to disclose recorded data (transaction record, etc.), similar to the bitcoin block chain. The target data itself can be falsified. However, in case such falsification is made, when the encrypted target data is decrypted, the falsified target data does not coincide with the target data obtained by decrypting the encrypted target data. Accordingly, the falsification can be found. For example, in the recording step, the communication device may transmit, to the recording device, encryption target data that is the target data encrypted by all the encryption units of the communication devices, and the target data that is an origin of the encryption target data, and the recording device may record the encryption target data and the target data that is the origin thereof in a state of being associated with each other.

The target data that is encrypted by all the encryption units of the communication devices and is recorded in the recording device by the recording step is set into a state of being disclosed to the devices connected to the network. Accordingly, the multi-encrypted target data is under surveillance of a third party, and the possibility of such data falsification further decreases. In this case, if the encrypted target data, and the plaintext target data that is the origin thereof are recorded in the recording device, both of them can be in a disclosed state.

The above situations also apply to the case where the auxiliary communication device participates in the encryption step.

In the case where the auxiliary communication device participates in the encryption step, the invention of the present application may further include a recording step of causing the communication devices, and one or more of the auxiliary communication devices that hold the target data encrypted by the encryption units included in the communication devices and the auxiliary encryption units included in all the auxiliary communication devices, to transmit the target data encrypted by the encryption units included in the communication devices and the auxiliary encryption units included in all the auxiliary communication devices, to the recording device that is connected to the network and is capable of recording data, and causing the recording device to record the target data encrypted by the encryption units included in the communication devices and the auxiliary encryption units included in all the auxiliary communication devices. In the recording step, the communication device or the auxiliary communication device may transmit, to the recording device, encryption target data that is the target data encrypted by all the encryption units of the communication devices and the auxiliary communication devices, and the target data that is an origin of the encryption target data, and the recording device may record the encryption target data and the target data that is the origin thereof in a state of being associated with each other. In this case, if the encrypted target data, and the plaintext target data that is the origin thereof are recorded in the recording device, both or any of them can be in a disclosed state.

In this case, the target data encrypted by the encryption units included in the communication devices and the auxiliary encryption units included in all the auxiliary communication devices by the recording step is set a state of being disclosed to the devices connected to the network.

However, the encrypted target data, or the encrypted target data and the target data, which are recorded in the recording device, may be in a state of being included in the block, similar to the conventional block chain. Accordingly, the encrypted target data recorded in the recording device is prevented from being falsified or removed, or falsification or removal is allowed to be found.

For example, encryption target data that is the target data encrypted by all the encryption units of the communication devices may be recorded in the recording device in a state of being included in a block that is an aggregation of data items and is connected to an immediately previous block thereof, the blocks each including an operation value that is a value obtained by applying a predetermined arithmetic operation to the immediately previous block, and in the recording step, the communication device that transmits the encryption target data to the recording device may generate the block including the encryption target data that is to be transmitted, and transmit the block to the recording device. In this case, the new block is generated in the communication device. For example, the operation value may be a hash value obtained by applying a hash operation to the immediately previous block, which similarly applies to the description below. This also applies to the case where the auxiliary communication device resides. In the case where the auxiliary communication device resides, in the communication devices and the auxiliary communication devices, encryption target data that is the target data encrypted by the encryption units included in the communication devices and the auxiliary encryption units included in all the auxiliary communication devices may be recorded in the recording device in a state of being included in a block that is an aggregation of data items and is connected to an immediately previous block thereof, the blocks each including an operation value that is a value obtained by applying a predetermined arithmetic operation to the immediately previous block, and in the recording step, the communication device or the auxiliary communication device that transmits the encryption target data to the recording device may generate the block including the encryption target data that is to be transmitted, and transmit the block to the recording device. In this case, the new block is generated in the communication device or the auxiliary communication device.

On the other hand, the new block may be generated in the recording device. For example, encryption target data that is the target data encrypted by all the encryption units of the communication devices may be recorded in the recording device in a state of being included in a block that is an aggregation of data items and is connected to an immediately previous block thereof, the blocks each including an operation value that is a value obtained by applying a predetermined arithmetic operation to the immediately previous block, and in the recording step, the recording device may generate the block, based on the encryption target data received from the communication device, and connect the block to the immediately previous block. In the case where the auxiliary communication device resides, in the communication devices and the auxiliary communication devices, encryption target data that is the target data encrypted by the encryption units included in the communication devices and the auxiliary encryption units included in all the auxiliary communication devices may be recorded in the recording device in a state of being included in a block that is an aggregation of data items and is connected to an immediately previous block thereof, the blocks each including an operation value that is a value obtained by applying a predetermined arithmetic operation to the immediately previous block, and in the recording step, the recording device may generate the block, based on the encryption target data received from the communication device or the auxiliary communication device, and connect the block to the immediately previous block. In the case where the new block is generated in the recording device, the number of the encryption target data items included in the one block is one or more, and in the recording step, at predetermined timing after receiving one or more of the encryption target data items from the communication device, the recording device may generate the block including the one or more encryption target data items received after generation of the immediately previous block, and connect the block to the immediately previous block. Accordingly, multiple encryption target data items may be included in one block.

In this case, not only the encryption target data items, but also the target data that is the origin of the encryption target data may be included in the block. For example, the block may include the encryption target data, the target data that is an origin of the encryption target data, and the operation value, and in the recording step, the communication device that transmits the encryption target data to the recording device may generate the encryption target data that is to be transmitted, and the block including the encryption target data, and transmit it to the recording device. In the case where the auxiliary communication device resides, the block may include the encryption target data, the target data that is an origin of the encryption target data, and the operation value, and in the recording step, the communication device or the auxiliary communication device that transmits the encryption target data to the recording device may generate the block including the encryption target data that is to be transmitted and the encryption target data that is the origin thereof, and transmit it to the recording device.

The block may be generated by the communication device or the auxiliary communication device as described above, or may be generated by the recording device. For example, the block includes the encryption target data, the target data that is the origin of the encryption target data, and the operation value, in a state where the encryption target data and the target data that is the origin thereof are associated with each other, and in the recording step, the recording device may generate the block based on the encryption target data received from the communication device, and the encryption target data that is an origin thereof, and connect the block to the immediately previous block. In a case where the auxiliary communication device resides, the block includes the encryption target data, the target data that is the origin of the encryption target data, and the operation value, in a state where the encryption target data and the target data that is the origin thereof are associated with each other, and in the recording step, the recording device may generate the block based on the encryption target data received from the communication device or the auxiliary communication device, and the encryption target data that is an origin thereof, and connect the block to the immediately previous block.

The encryption target data and the target data may be in a state of being disclosed to the devices connected to the network, irrespective of whether or not the data is recorded in the recording device in the state of being included in the block.

The method according to the invention of the present application is described below in a more specified manner. Such a method corresponds to what is executed by the two communication devices, in the invention described above. The first communication device and the second communication device in the following description correspond to the two communication devices in the invention described above. There is originally no need to distinguish the first communication device and the second communication device from each other. Between the two communication devices, what encrypts the target data first is called the first communication device, for the sake of convenience.

The invention of the present application in this case is a method executed in a communication system comprising the first communication device including a first encryption unit capable of encrypting predetermined data in a decryptable manner, and a second communication device including a second encryption unit capable of encrypting predetermined data in a decryptable manner according to a method that is different from a method of the first encryption unit, the first communication device and the second communication device being communicable with each other via a predetermined network.

This method includes: a first encryption step of causing the first communication device to encrypt, through the first encryption unit, target data that is data both of users of the first communication device and the second communication device intend to save, and to generate first encryption target data; a first transmission step of causing the first communication device to transmit the first encryption target data to the second communication device via the network; a first reception step of causing the second communication device to receive the first encryption target data from the first communication device via the network; a second encryption step of causing the second communication device to encrypt the first encryption target data through the second encryption unit, and to generate second first encryption target data; a second transmission step of causing the second communication device to transmit the second first encryption target data to the first communication device via the network; and a second reception step of causing the first communication device to receive the second first encryption target data from the second communication device via the network.

Advantageous effects of such an invention are the same as the advantageous effects of the invention described above.

What is obtained by encrypting the target data is the encryption target data. The target data encrypted only by the first communication device is the first encryption target data. What is obtained by subsequently further encrypting the first encryption target data by the second communication device is called the second first encryption target data. Usage of the terms similarly applies to the following description.

The aforementioned invention about the method executed by the communication system that includes the first communication device and the second communication device can be grasped as a method executed by the first communication device or the second communication device, as described below. The advantageous effects of the method executed by the first communication device, and the method executed by the second communication device are the same as the advantageous effects of the method executed by the communication system that includes the first communication device and the second communication device.

The method executed by the first communication device as an example is a method executed by the first communication device in a communication system comprising the first communication device including a first encryption unit capable of encrypting predetermined data in a decryptable manner, and a second communication device including a second encryption unit capable of encrypting predetermined data in a decryptable manner according to a method that is different from a method of the first encryption unit, the first communication device and the second communication device being communicable with each other via a predetermined network.

This method includes: a first encryption step of encrypting, through the first encryption unit, target data that is data both of users of the first communication device and the second communication device intend to save, and generating first encryption target data; a first transmission step of transmitting the first encryption target data to the second communication device via the network; and a second reception step of receiving second first encryption target data from the second communication device via the network, the second first encryption target data being generated by the second communication device encrypting, through the second encryption unit, the first encryption target data received from the first communication device via the network, the steps being executed by the first communication device.

In the method executed by the first communication device, the first communication device may automatically execute the first encryption step, the first transmission step, and the second reception step. For example, the user of the first communication device inputs, into the first communication device, certain operation content for selecting or specifying the second communication device and starting the processes, and subsequently, the first communication device can automatically execute the first encryption step, the first transmission step, and the second reception step. The advantageous effects are as already described above.

The method executed by the first communication device may further include a step of causing the first communication device to transmit the second first encryption target data to a recording device that is connected to the network and is capable of recording data, and causing the recording device to record the second first encryption target data. The advantageous effects are as already described above.

The first communication device may transmit the second first encryption target data, and the target data that is an origin of the second first encryption target data, to the recording device, and the recording device may record the second first encryption target data, and the target data that is the origin thereof, in a state of being associated with each other. The encryption target data recorded in the recording device may be included in the block as described above. For example, the second first encryption target data is recorded in the recording device in a state of being included in a block that is an aggregation of data items and is connected to an immediately previous block thereof, the blocks each including an operation value that is a value obtained by applying a predetermined arithmetic operation to the immediately previous block, and the first communication device may generate the block including the second first encryption target data to be transmitted, and transmit the block to the recording device. The block may include not only the second first encryption target data but also the target data that is the origin thereof. For example, the block includes the second first encryption target data, the target data that is the origin of the second first encryption data, and the operation value, and the first communication device may generate the block including the second first encryption target data that is to be transmitted and the target data that is the origin thereof, and transmit the block to the recording device. In a case where the second first encryption target data may be recorded in the recording device in a state of being included in a block that is an aggregation of data items and is connected to an immediately previous block thereof, the blocks each including an operation value that is a value obtained by applying a predetermined arithmetic operation to the immediately previous block, and the first communication device transmits the second first encryption target data to the recording device, a method may be executed where the recording device subsequently generates the block, based on the second first encryption target data received from the first communication device, and connects the block to the immediately previous block. In this case, the number of the second first encryption target data items included in the one block is one or more, and at predetermined timing after receiving one or more of the second first encryption target data items from the first communication device, the recording device may generate the block including the one or more second first encryption target data items received after generation of the immediately previous block, and connect the block to the immediately previous block. In a case where the second first encryption target data, and the target data that is the origin of the second first encryption data may be recorded in the recording device in a state of being included in a block that is an aggregation of data items and is connected to an immediately previous block thereof, the blocks each including an operation value that is a value obtained by applying a predetermined arithmetic operation to the immediately previous block, and the first communication device transmits the second first encryption target data, and the target data that is the origin of the second first encryption target data to the recording device, the recording device may subsequently generate the block, based on the second first encryption target data, and the target data that is the origin of the second first encryption target data received from the first communication device, and connect the block to the immediately previous block. These advantageous effects are as already described above.

The method executed by the second communication device as an example is a method executed by the second communication device in a communication system comprising the first communication device including a first encryption unit capable of encrypting predetermined data in a decryptable manner, and a second communication device including a second encryption unit capable of encrypting predetermined data in a decryptable manner according to a method that is different from a method of the first encryption unit, the first communication device and the second communication device being communicable with each other via a predetermined network.

This method includes: a first reception step of receiving first encryption target data from the first communication device via the network, the first encryption target data being generated by the first communication device encrypting, through the first encryption unit, target data that is data both of users of the first communication device and the second communication device intend to save; a second encryption step of encrypting the first encryption target data through the second encryption unit, and generating second first encryption target data; and a second transmission step of transmitting the second first encryption target data to the first communication device via the network, the steps being executed by the second communication device.

In the method executed by the second communication device, the second communication device may automatically execute the first reception step, the second encryption step, and the second transmission step. For example, the user of the first communication device inputs, into the first communication device, certain operation content for selecting or specifying the second communication device and starting the processes, and subsequently, the second communication device can automatically execute the first reception step, the second encryption step, and the second transmission step. The advantageous effects are as already described above.

The method executed by the second communication device may further include a step of causing the second communication device to transmit the second first encryption target data to a recording device that is connected to the network and is capable of recording data, and causing the recording device to record the second first encryption target data. The advantageous effects are as already described above.

The second communication device may transmit the second first encryption target data, and the target data that is an origin of the second first encryption target data, to the recording device, and the recording device may record the second first encryption target data, and the target data that is the origin thereof, in a state of being associated with each other. The encryption target data recorded in the recording device may be included in the block as described above. For example, the second first encryption target data is recorded in the recording device in a state of being included in a block that is an aggregation of data items and is connected to an immediately previous block thereof, the blocks each including an operation value that is a value obtained by applying a predetermined arithmetic operation to the immediately previous block, and the second communication device may generate the block including the second first encryption target data to be transmitted, and transmit the block to the recording device. The block may include not only the second first encryption target data but also the target data that is the origin thereof. For example, the block includes the second first encryption target data, the target data that is the origin of the second first encryption target data, and the operation value, and the second communication device may generate the block including the second first encryption target data that is to be transmitted and the target data that is the origin thereof, and transmit the block to the recording device.

In a case where the second first encryption target data is recorded in the recording device in a state of being included in a block that is an aggregation of data items and is connected to an immediately previous block thereof, the blocks each including an operation value that is a value obtained by applying a predetermined arithmetic operation to the immediately previous block, and the second communication device transmits the second first encryption target data to the recording device, a method may be executed where the recording device subsequently generates the block, based on the second first encryption target data received from the second communication device, and connects the block to the immediately previous block. In a case where the block includes the second first encryption target data, the target data that is the origin of the second first encryption target data, and the operation value, in a state where the second first encryption target data and the target data are associated with each other, the recording device may generate the block, based on the second first encryption target data received from the second communication device and the target data that is the origin thereof, and connect the block to the immediately previous block. In the two cases where the block is generated by the recording device, the number of the second first encryption target data items included in the one block is one or more, and at predetermined timing after receiving one or more of the second first encryption target data items from the second communication device, the recording device may generate the block including the one or more second first encryption target data items received after generation of the immediately previous block, and connect the block to the immediately previous block. These advantageous effects are as already described above.

The inventor of the present application proposes the first communication device also as an aspect of the invention of the present application. The advantageous effects are the same as the advantageous effects of the method executed by the first communication device. These are as follows, for example.

A first communication device is a first communication device in a communication system that includes the first communication device, and a second communication device including a second encryption unit capable of encrypting predetermined data in a decryptable manner, the devices being communicable with each other via a predetermined network.

The first communication device includes: a first encryption unit that encrypts target data by a method different from a method of the second encryption unit, and generates first encryption target data, the target data being data both of users of the first communication device and the second communication device intend to save; a first transmission unit of transmitting the first encryption target data to the second communication device via the network; and a first reception unit that receives second first encryption target data from the second communication device via the network, the second first encryption target data being generated by the second communication device encrypting, through the second encryption unit, the first encryption target data received from the first communication device via the network.

The inventor of the present application proposes, also as an aspect of the invention of the present application, a computer program for causing, for example, a general-purpose computer to function as the first communication device. These are as follows, for example.

The computer program is a computer program for causing a predetermined computer to function as a first communication device in a communication system that includes the first communication device, and a second communication device including a second encryption unit capable of encrypting predetermined data in a decryptable manner, the devices being communicable with each other via a predetermined network.

The computer program is a computer program for causing the computer to function as: a first encryption unit that encrypts target data by a method different from a method of the second encryption unit, and generates first encryption target data, the target data being data both of users of the first communication device and the second communication device intend to save; a first transmission unit of transmitting the first encryption target data to the second communication device via the network; and a first reception unit that receives second first encryption target data from the second communication device via the network, the second first encryption target data being generated by the second communication device encrypting, through the second encryption unit, the first encryption target data received from the first communication device via the network.

The inventor of the present application proposes the second communication device also as an aspect of the invention of the present application. The advantageous effects are the same as the advantageous effects of the method executed by the second communication device. These are as follows, for example.

The second communication device is a second communication device in a communication system that includes a first communication device including a first encryption unit capable of encrypting predetermined data in a decryptable manner, and a second communication device, the devices being communicable with each other via a predetermined network.

The second communication device includes: a second reception unit that receives first encryption target data from the first communication device via the network, the first encryption target data being generated by the first communication device encrypting, through the first encryption unit, target data that is data both of users of the first communication device and the second communication device intend to save; a second encryption unit that encrypts the first encryption target data by a method different from a method of the first encryption unit, and generates second first encryption target data; and a second transmission unit that transmits the second first encryption target data to the first communication device via the network.

The inventor of the present application proposes, also as an aspect of the invention of the present application, a computer program for causing, for example, a general-purpose computer to function as the second communication device. These are as follows, for example.

The computer program is a computer program for causing a predetermined computer to function as a second communication device in a communication system that includes a first communication device including a first encryption unit capable of encrypting predetermined data in a decryptable manner, and a second communication device, the devices being communicable with each other via a predetermined network.

The computer program is a computer program causing the computer to function as: a second reception unit that receives first encryption target data from the first communication device via the network, the first encryption target data being generated by the first communication device encrypting, through the first encryption unit, target data that is data both of users of the first communication device and the second communication device intend to save; a second encryption unit that encrypts the first encryption target data by a method different from a method of the first encryption unit, and generates second first encryption target data; and a second transmission unit that transmits the second first encryption target data to the first communication device via the network.

### Brief Description of Drawings

FIG. 1 is a diagram schematically showing an overall configuration of a communication system according to a first embodiment;
FIG. 2 is a perspective view showing an external appearance of a user terminal in the communication system shown in FIG. 1;
FIG. 3 is a diagram showing a hardware configuration of the user terminal in the communication system shown in FIG. 1;
FIG. 4 is a block diagram showing functional blocks generated in the user terminal in the communication system shown in FIG. 1;
FIG. 5 is a diagram showing a flow of processes to be executed in the communication system shown in FIG. 1;
FIG. 6 is a diagram showing an example of an image displayed on a display of the user terminal shown in FIG. 2;
FIG. 7 is a diagram schematically showing an overall configuration of a communication system according to a second embodiment;
FIG. 8 is a diagram showing an example of an image displayed on a display of the user terminal according to the second embodiment;
FIG. 9 is a block diagram showing functional blocks generated in a recording device in the communication system of Modification Example 1;
FIG. 10 is a diagram schematically showing data included in blocks recorded in a recording unit of the recording device in the communication system of Modification Example 1; and
FIG. 11 is a block diagram showing functional blocks generated in the user terminal in the communication system of Modification Example 2.

### Description of Embodiments

First and second embodiments of the present invention will be described below. In the description of each embodiment and modification example, the same element is denoted by the same reference numeral and duplication description will not be presented in some cases. If there is no contradiction, each embodiment and modification example can be combined with another embodiment and modification example.

### <<First Embodiment>>

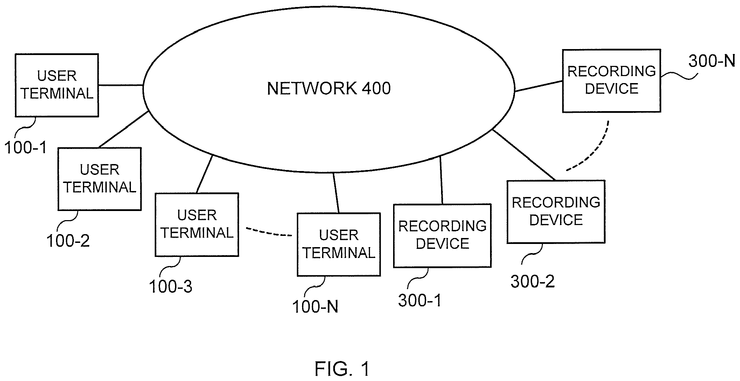

FIG. 1 schematically shows an overall configuration of a communication system according to a first embodiment.

Normally, the communication system is configured to include a plurality of user terminals 100-1 to 100-N (which may also hereinafter simply be described as "user terminal 100."). These are all connectable to a network 400.

The network 400 is the Internet in this embodiment without being limited thereto.

The user terminal 100 is an example of a communication device (or a first communication device and a second communication device) of the invention of the present application in a broader sense.

Although not necessary, such a communication system includes a recording device 300 connected to the network 400. In many cases, multiple recording devices 300 are provided. In some cases, many such devices are provided.

Normally, the user terminal 100 is possession of each user. The user terminal 100 includes a computer. The user terminal 100 is a mobile phone, a smartphone, a tablet, a notebook computer, a desktop computer, or the like. These may be general-purpose ones. The smartphone is, for example, an iPhone that is manufactured and sold by Apple Japan, LLC. An example of the tablet is an iPad that is manufactured and sold by Apple Japan, LLC. Hereinafter, the description is made assuming that the user terminal is the smartphone, but is not limited thereto.

The user terminals 100 are at least required to be capable of communicating with each other via the network 400, and capable of performing processes of encrypting and decrypting data, which will be described later. The user terminal 100 in this embodiment is a smartphone. Accordingly, it is a matter of course that this terminal can communicate with another user terminal 100 via the network 400. The functions of encrypting and decrypting data can be acquired by a computer program described later.

A configuration of the user terminal 100 will be described below. Each of the user terminals 100-1 to 100-N has the same configuration in relation to the invention of the present application.

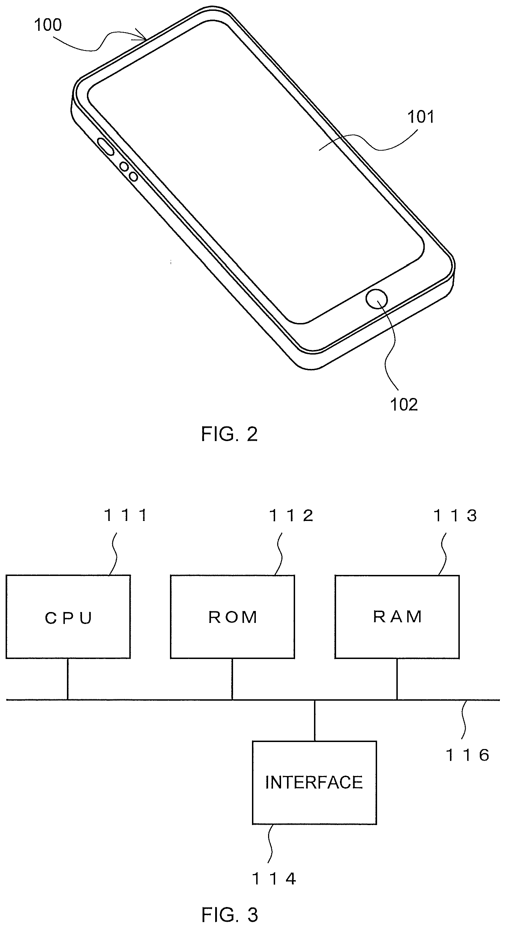

An example of external appearance of the user terminal 100 is shown in FIG. 2.

The user terminal 100 includes a display 101. The display 101 is used to display still images or moving images, and a publicly known or well-known display can be used. The display 101 is, for example, a liquid crystal display. The user terminal 100 also includes an input device 102. The input device 102 is used for the user to perform a desired input on the user terminal 100. A publicly known or well-known input device can be used as the input device 102. The input device 102 of the user terminal 100 in this embodiment is a button-type input device, but is not limited thereto, and a numeric keypad, a keyboard, a trackball, a mouse, or the like can also be used. When the user terminal 100 is, for example, a notebook computer or a desktop computer, the input device 102 may be a keyboard, a trackball, a mouse or the like. Moreover, when the display 101 is a touch panel, the display 101 also has a function of the input device 102, which applies to this embodiment.

Although every detail of data input through the input device 102 will be described later, the data is selection information and start information, for example.

A configuration of hardware of the user terminal 100 is shown in FIG. 3.

The hardware includes a CPU (central processing unit) 111, a ROM (read only memory) 112, a RAM (random access memory) 113, and an interface 114, which are interconnected by a bus 116.

The CPU 111 is an arithmetic operation device that performs arithmetic operations. The CPU 111, for example, executes a computer program recorded in the ROM 112 to execute processing to be described below. It should be noted that the computer program used herein includes at least a computer program for causing the user terminal 100 to function as a communication device (or the first communication device and the second communication device) of the invention of the present application. The computer program may be pre-installed in the user terminal 100, or may be post-installed. The computer program may be installed in the user terminal 100 via a predetermined recording medium (not shown) such as a memory card, or may be installed via a network such as the Internet.

The ROM 112 records computer programs and data necessary for the CPU 111 to execute processing to be described below. The computer program recorded in the ROM 112 is not limited thereto. For example, when the user terminal 100 is the smartphone, a computer program and data are recorded, for example, for executing telephone calls or e-mails, which are required to cause the user terminal 100 to function as the smartphone. The user terminal 100 can also browse websites based on data received via the network 400, and is mounted with a publicly known web browser for enabling the browsing of the websites.

The RAM 113 provides a work area necessary for the CPU 111 to perform processing.

The interface 114 performs data exchange between the CPU 111 and the RAM 113 connected via the bus 116 and the outside. The display 101 and the input device 102 described above are connected to the interface 114. The operation content input from the input device 102 is input to the bus 116 from the interface 114, and image data to be described below is output to the display 101 from the interface 114. The interface 114 is also connected to a transmission and reception unit, which is not shown.

The transmission and reception unit transmits and receives data via the network 400 that is the Internet. Such communication may also be performed in a wired manner, but when the user terminal 100 is the smartphone, the communication is wirelessly performed in general. As long as it is possible, the transmission and reception unit may have a publicly known or well-known configuration. The data received by the transmission and reception unit from the network 400 is received through the interface 114, and the data passed from the interface 114 to the transmission and reception unit is sent to the outside, for example, to another user terminal 100 by the transmission and reception unit via the network 400. The data that may be sent from the transmission and reception unit to another device via the network 400 is target data or encrypted target data, which are to be described later. This similarly applies to data that may be received by the transmission and reception unit from another device via the network 400.

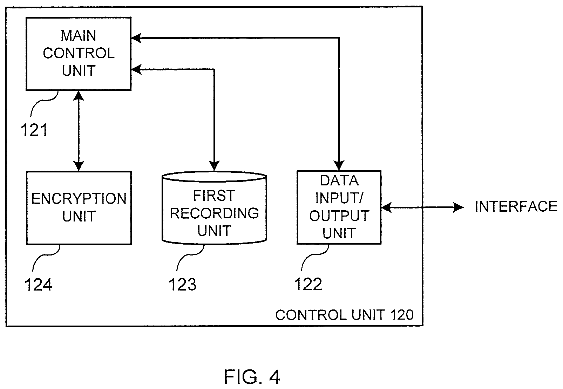

Functional blocks as shown in FIG. 4 are generated within the user terminal 100 when the CPU 111 executes the computer program. It should be noted that while the following functional blocks may be generated with functions of the above-described computer program alone for causing the user terminal 100 to function as the communication device (or the first communication device and the second communication device) of the invention of the present application, the following functional blocks may be generated in cooperation with the above-described computer program and an OS and other computer programs installed in the user terminal 100.

A control unit 120 to be described below is generated in the user terminal 100 in relation to functions of the invention of the present application. A main control unit 121, a data input/output unit 122, a first recording unit 123, and an encryption unit 124 are in the control unit 120.

The control unit 120 executes information processing as will be described below.

The main control unit 121 performs overall control within the control unit 120. For example, the main control unit 121 may accept selection information and start information, which are to be described below, from the data input/output unit 122. The selection information is information for selecting target data that is to be shared among some user terminals 100 including the user terminal 100 having the main control unit 121 and be recorded and saved, and for specifying the user terminals 100 that share, record and save the target data. Upon acceptance of the selection information, the main control unit 121 reads the target data selected by the selection information, from the first recording unit 123. Upon acceptance of the start information, the main control unit 121 executes an after-mentioned process for starting an encryption step which is to be described later.

When the target data is read from the first recording unit 123, the main control unit 121 may send the target data to the encryption unit 124 in some cases. The main control unit 121 may receive the target data or encrypted target data from the data input/output unit 122 in some cases. Upon receipt thereof, the main control unit 121 sends the data to the encryption unit 124 or the first recording unit 123.

Note that a user ID unique to each user terminal 100 is recorded in the main control unit 121 of the user terminal 100. Use of the user ID can identify each user terminal 100. The user ID is, for example, numerals, alphabetic characters, symbols, or a combination of them. Although not close to reality, this embodiment assumes that symbols 100-1 to 100-N, which are assigned to the respective user terminals 100, are the user IDs of the user terminals 100. Usage of the user ID will be described later.

The main control unit 121 may receive the encrypted target data from the encryption unit 124 in some cases. Upon receipt of the encrypted target data, the main control unit 121 sends the data to the data input/output unit 122.

The data input/output unit 122 inputs and outputs data from and to the control unit 120.

Specifically, the data input/output unit 122 accepts the selection information and the start information input from the input device 102 described above via the interface 114. Upon acceptance of the data from the input device 102, the data input/output unit 122 sends the selection information and the start information to the main control unit 121.

The target data or the encrypted target data may be sent from the main control unit 121 to the data input/output unit 122. When the data is sent, the data input/output unit 122 sends the data to the transmission and reception unit via the interface 114.

The target data or the encrypted target data sent from another device via the network 400 and received by the transmission and reception unit may be sent via the interface 114 to the data input/output unit 122. Upon receipt of the data, the data input/output unit 122 sends the data to the main control unit 121.

The first recording unit 123 is for recording data. Data that can be recorded in the first recording unit 123 is, for example, target data, or after-mentioned data obtained by encrypting the target data. As described later, other data, for example, key data, may be recorded in the first recording unit 123 in some cases.

The encryption unit 124 encrypts and decrypts data. Methods of encryption and decryption performed by the encryption unit 124 may be the same, for example, always be performed using the same key and the same algorithm, or may not be the same. For example, the encryption method performed by the encryption unit 124 may vary every time a process of encrypting certain data is performed. In a case where the encryption method performed by the encryption unit 124 is changed, this may be achieved by any of three modes including change in key used for encryption, change in algorithm used for encryption, and change in key and algorithm used for encryption. Irrespective of whether the encryption method performed by the encryption unit 124 is changed or not, when the encryption unit 124 decrypts data, arithmetic operations required to decrypt encrypted data are performed by the encryption unit 124.

The user terminals 100 include the respective encryption units 124. The encryption method executed by the encryption unit 124 of each user terminal 100 is unique. For example, in a case where the encryption method executed by the encryption units 124 of the user terminals 100 is fixed to a single method, the algorithm used for the encryption process by the encryption units 124 of the user terminals 100 may be the same while the keys used for encryption processes by the encryption units 124 of the user terminals 100 may be different from each other. In the case where the encryption methods executed by the encryption units 124 of the user terminals 100 vary, for example, the case where the algorithm used for encryption by the encryption units 124 of the user terminals 100 is always fixed and is the same among all the encryption units 124 and the key used for encryption by the encryption unit 124 of each user terminal 100 changes every time data is encrypted, even with the same key possibly happening to be used between a certain user terminal 100 and another user terminal 100, if the probability is low to an ignorable extent (for example, the occurrence probability of the same key is a ten-thousandth or less), the encryption method executed by the encryption unit 124 of each user terminal 100 can be assumed to be unique.

The encryption unit 124 may receive the target data or encrypted target data from the main control unit 121 in some cases. If the data is sent from the main control unit 121 to generate multi-encrypted target data, the encryption unit 124 further encrypts the received data and then returns the encrypted data to the main control unit 121. The encryption unit 124 may receive the encrypted target data from the main control unit 121. To restore the data to the target data, if it has been sent from the main control unit 121, the encryption unit 124 applies a decryption process to the data and returns the decrypted data to the main control unit 121.

A configuration of the recording device will be described below.

The recording device 300 is a typical database connectable to the network 400. The hardware configuration may be the same as that of a computer or a server for constructing a typical database, and has no specific features. Although not shown, the recording device 300 includes a CPU, a ROM, a RAM, an HDD that is an example of a large-capacity recording medium, and an interface, which are connected to each other by a bus.

In view of hardware, the recording device 300 includes a recording unit as a functional block that is made up of a part of an HDD and is not shown. The multi-encrypted target data sent from the user terminal 100 is recorded in such a recording unit. As described later, the multi-encrypted target data may be recorded in the recording unit in a state viewable from other devices (for example, user terminals 100) connected to the network 400.

Although the number of recording devices 300 may be one, the number is typically more than one. For the node of block chain of bitcoin, the recording device 300 may be installed voluntarily by a party participating in the structure of the communication system, or installed by a party that is an administrator of the communication system or similar to such an administrator.

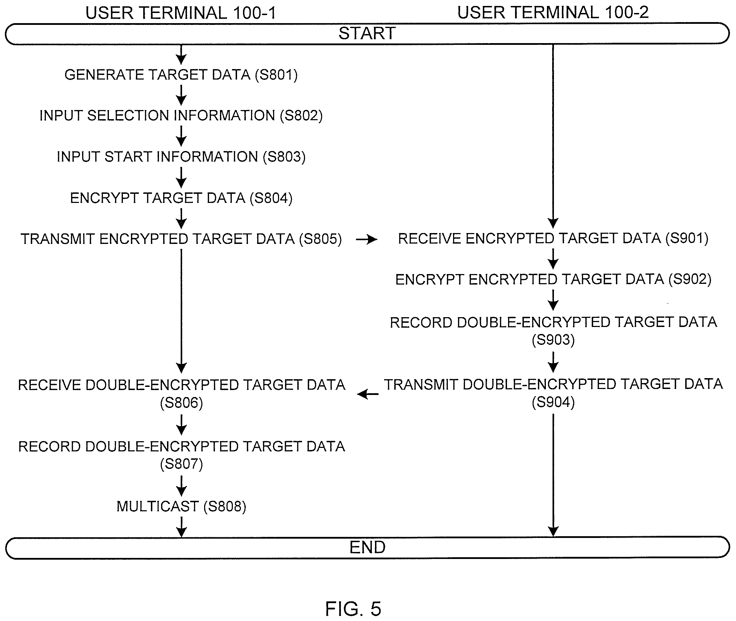

A method of use and operations of the communication system described above are described mainly with reference to FIG. 5.

In such a communication system, target data that is data that all of users of multiple user terminals 100 intend to save is saved in the user terminals 100.

### <Case where two user terminals 100 save target data>

First, a case where two users intend to save the target data and two user terminals 100 of these users are used to save the target data is described. Although not limited thereto, the following description is made assuming that the user terminal 100-1 and the user terminal 100-2 are the two user terminals 100 in this case.

First, at least one of the user terminal 100-1 and the user terminal 100-2 is in a state of holding the target data. The data that both the users of the user terminal 100-1 and the user terminal 100-2 intend to save (for example, record it in the user terminal 100-1 and the user terminal 100-2 in a state incapable of being falsified) is, typically, contract data specifying a contract concluded between the two users. For example, if the user of the user terminal 100-1 transfers a virtual currency to the user of the user terminal 100-2, i.e., data on the virtual currency is transmitted from the user terminal 100-1 to the user terminal 100-2, such transaction record data serves as the contract data. It is a matter of course that the contract specified by the contract data is not necessarily accompanied by transmission and reception of data between the user terminals 100, and may be a land sales contract, a marriage contract or the like. Alternatively, one of the user terminal 100-1 and the user terminal 100-2, for example, the user terminal 100-1, may be a web server for allowing a third party to browse webpages, and such a contract may be a contract that pertains to a copyright and is concluded before allowing the user of the user terminal 100-2 to download a certain program.

It is a matter of course that the target data is not limited to that pertaining to a contract. Alternatively, the data may be data specifying information that the user terminal 100-1 and the user terminal 100-2 intend to keep in confidence between these two parties, intend not to be falsified, and intend to record correctly. For example, if the user of the user terminal 100-1 is a doctor and the user of the user terminal 100-2 is a patient, data on a prescription or a medical certificate issued by the doctor to the patient is the data concerned. For example, if the user of the user terminal 100-1 is an attorney at law and the user of the user terminal 100-2 is his/her client, data on advice or a written expert opinion provided by the attorney to the client is the data concerned. At least a part of the target data may include a computer program. If a predetermined condition is satisfied, the program may be appropriately, automatically executed by a certain computer. According to this, the communication system can support smart contract that is being realized through Ethereum (trademark) or the like.

However, all the above target data items are only examples. The target data item may be any data item only if all of the users of user terminals 100 intend to save the data.

In any case, the target data is generated by a publicly known or well-known method (S801). The target data may be generated in the user terminal 100-1, generated in the user terminal 100-2, generated simultaneously, for example, in the user terminal 100-1 and the user terminal 100-2, or generated in a device other than the user terminal 100-1 and the user terminal 100-2 and then sent through transmission or the like via the network 400 to the user terminal 100-1 and the user terminal 100-2. Further alternatively, the target data is not necessarily newly generated data, for example, may be data having previously been held by at least one of the user terminal 100-1 and the user terminal 100-2.

Irrespective of the type of the obtaining step, one of the user terminal 100-1 and the user terminal 100-2 is in a state of holding the target data. In this embodiment, it is assumed that the target data exists only in the user terminal 100-1, in any way.

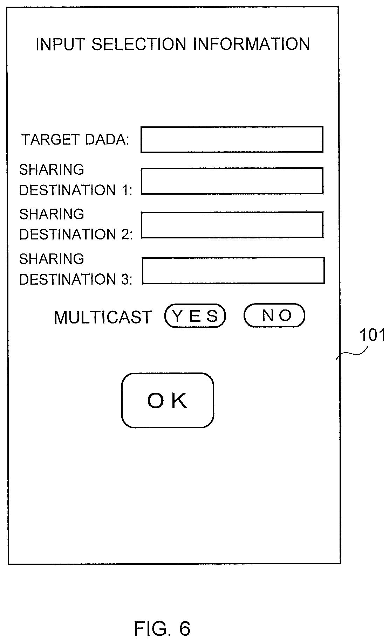

The target data is, for example, in a state of being recorded in the first recording unit 123 of the user terminal 100-1. Here, the user of the user terminal 100-1 inputs selection information that is a combination of information specifying the target data to be saved, and a user intending to share and save the target data or data specifying his/her user terminal 100 (S802). When the selection information is input, for example, an image for prompting the user to input the selection information is displayed on the display 101 of the user terminal 100-1, as shown in FIG. 6. Data on such an image is generated by the main control unit 121 of the user terminal 100-1. Such image data is sent from the main control unit 121 to the display 101 via the data input/output unit 122 and the interface 114, thereby displaying the image as shown in FIG. 6 on the display 101.

The image for prompting the user to input the selection information includes: characters of Target data, and a landscape rectangular frame that is for allowing the target data to be input and is arranged horizontally next to the characters; characters of Sharing destination(s) 1 to 3, and landscape rectangular frames that are for input associated respectively with the characters of Sharing destination(s) 1 to 3 and are arranged horizontally next to the characters; characters of Multicast, and buttons that are assigned YES and NO and are arranged horizontally next to the characters of Multicast; and a button that is assigned characters of OK and disposed lowermost.

The frame displayed horizontally next to the characters of Target data is for allowing information for selecting the target data to be written therein. Typically, the target data seems to be a file on certain data. In this case, the user writes the file name of the target data in the frame, for example. Such writing is performed by operating the input device 102.

The frames prepared horizontally next to the characters of sharing destination(s) 1 to 3 are for allowing information to be written therein, the information being for identifying the user terminal 100 that saves the target data with the user terminal 100-1. The sharing destinations 1 to 3 each correspond to the information for identifying one user terminal 100. In the example of FIG. 6, three user terminals 100 at the maximum can be designated as user terminals 100 that save the target data together with the user terminal 100-1. Such designation of the user terminals 100 can be performed based on the user ID, for example. Alternatively, the designation may be performed based on the name or a nickname of each user or any identifier assigned to each user terminal 100. In this embodiment, the user terminal 100 that saves the target data together with the user terminal 100-1 is only the user terminal 100-2. The user of the user terminal 100-1 writes it only to the sharing destination 1 on the display 101. Such writing is performed by operating the input device 102. Note that in this embodiment, the frames where the sharing destinations are to be written are preliminarily prepared as the three sharing destinations 1 to 3. However, these are not limited thereto. For example, such a frame is, first, indicated on the display 101 as only a single frame. The frame may be added by the user through operation of the input device 102 as required. Alternatively, the user may be allowed to input the required number of frames, and frames as many as the number designated by the user may be indicated on the display 101.

The input of the selection information has thus been described so far. In this embodiment, although not necessarily, in addition to the selection information, the following input about whether multicast is required or not is performed. Note that input about the necessity of multicast may be considered to correspond to a part of input of the selection information. It may be configured to always execute multicast, or not to execute multicast at all. In such a case, there is no need to ask the user for the necessity of multicast. The after-mentioned input and the indication on the display 101 for prompting the user to input it can be omitted.

The buttons assigned the characters of YES and NO positioned horizontally next to the characters of Multicast are for allowing the user to click any of the buttons to select whether multicast is performed or not. Here,
"Multicast" means a process of causing the recording device 300 to record the multi-encrypted target data, described later. Such a process will be described later in detail. If the user selects the button assigned the characters of YES, multicast is performed. If the user selects the button assigned the characters of NO, multicast is not performed. Such selection is performed by operating the input device 102. Although not limited thereto, this embodiment assumes that the user selects the button assigned the characters of YES.

After completion of the entire input described above, the user clicks the button assigned the characters of OK. When input to the button assigned the characters of OK is performed, input of the selection information described above and the information about selection of whether multicast is performed or not are executed. Input to the button assigned the characters of OK also serves as input of the start information (S803).

When the user of the user terminal 100-1 clicks the button assigned the characters of OK, the selection information, the information on the necessity of multicast, and the start information are generated. These pieces of information are sent from the input device 102 to the data input/output unit 122 of the control unit 120 through the interface 114 and then sent to the main control unit 121.

Upon receipt of the selection information, the main control unit 121 reads, from the first recording unit 123, data specified by the information written in the frame indicated horizontally next to the characters of Target data on the display 101 among the pieces of the selection information, as the target data. Such data is plaintext data. This is hereinafter dealt with as the target data.

The main control unit 121 sends the target data read from the first recording unit 123 to the encryption unit 124. The encryption unit 124 having received the data encrypts the received target data (S804). Although not limited thereto, the algorithm used by the encryption unit 124 in this embodiment to encrypt the target data or the encrypted target data is always the same. On the other hand, although not limited thereto, the encryption unit 124 in this embodiment generates a new key in advance every time the target data or the encrypted target data is encrypted, and executes an encryption process using the generated new key. The encryption unit 124 encrypts the target data using the fixed algorithm and the key that varies every time the encryption process is performed, and obtains the encrypted target data.

The encryption unit 124 sends the encrypted target data and the key used for the encryption, to the main control unit 121. The main control unit 121 temporarily saves the key. The main control unit 121 adds the information written in the frame indicated horizontally next to the characters of the sharing destination 1 on the display 101 among the pieces of selection information, that is, the information for identifying the user terminal 100-2 that is the user terminal 100 of the opposite user sharing the multi-encrypted target data together with the user terminal 100-1, and the information for identifying the user terminal 100-1, to the encrypted target data. Although not limited thereto, in this embodiment, the user ID of the user terminal 100-2 is used as the former piece of information assigned to the encrypted target data, and user ID of the user of the user terminal 100-1, which is held by the main control unit 121, is used as the latter. The main control unit 121 sends the target data assigned the two user IDs to the data input/output unit 122. Such data is sent from the data input/output unit 122 to the transmission and reception unit via the interface 114.

The transmission and reception unit transmits the encrypted target data assigned the two user IDs, via the network 400, to the user terminal 100-2, which is the opposite user terminal 100 sharing the multi-encrypted target data together with the user terminal 100-1 (S805). The destination user terminal 100-2 can be identified by the user ID of the opposite user terminal 100-2, the user ID being assigned to the target data.

The encrypted target data assigned the two user IDs is transmitted via the network 400, and received by the transmission and reception unit of the user terminal 100-2 (S901).

The target data that has been encrypted by the user terminal 100-1 and assigned the two user IDs is sent from the transmission and reception unit of the user terminal 100-2 to the main control unit 121 via the interface 114 and the data input/output unit 122. The main control unit 121 sends the encrypted target data in the data to the encryption unit 124.

The encryption unit 124 further encrypts the encrypted target data (S902). The target data has thus been encrypted by the encryption unit 124 of the user terminal 100-1 and the encryption unit 124 of the user terminal 100-2 sequentially, or continuously in this order. That is, the thus obtained data is the multi-encrypted (double-encrypted) target data. Similar to the case of the user terminal 100-1, the encryption unit 124 of the user terminal 100-2 is assumed to perform encryption using the fixed algorithm and the varying key. However, the encryption algorithms used by the user terminal 100-1 and the user terminal 100-2 are not necessarily the same as each other.

The double-encrypted target data, accompanied by the key used for encrypting the data by the encryption unit 124, is sent from the encryption unit 124 to the main control unit 121. The main control unit 121 records the double-encrypted target data, with the key used for encrypting the data, in the first recording unit 123 (S903). The double-encrypted target data recorded in the first recording unit 123 may be assigned at least the user ID of the user of the user terminal 100-1 between the two user IDs described above. Meanwhile, the main control unit 121 assigns the two user IDs described above to the double-encrypted target data again. The double-encrypted target data assigned these two user IDs is sent from the main control unit 121 to the transmission and reception unit via the data input/output unit 122 and the interface 114.

The transmission and reception unit transmits the double-encrypted target data assigned the two user IDs to the user terminal 100-1 via the network 400 (S904). The destination user terminal 100-1 can be identified by the user ID of the opposite user terminal 100-1, the user ID being assigned to the target data.

The encrypted target data assigned the two user IDs is transmitted via the network 400, and received by the transmission and reception unit of the user terminal 100-1 (S806).

The double-encrypted target data assigned the two user IDs is sent from the transmission and reception unit of the user terminal 100-1 to the main control unit 121 via the interface 114 and the data input/output unit 122.

The main control unit 121 records, in the first recording unit 123, the double-encrypted target data together with the key used for encrypting the target data at the first time by the encryption unit 124 of the user terminal 100-1 (this key is provided from the encryption unit 124 and held by the main control unit 121 as described above) (S807). The double-encrypted target data recorded in the first recording unit 123 may be assigned at least the user ID of the user of the user terminal 100-2 between the two user IDs described above.

Thus, the double-encrypted target data is in a state of being shared between the user terminal 100-1 and the user terminal 100-2. The double-encrypted target data cannot be solely decrypted, of course by a third party, and also by the user terminal 100-1 and the user terminal 100-2, which are parties concerned having generated the double-encrypted target data. If the double-encrypted target data is falsified in any way, the falsification is found based on the fact that the double-encrypted target data cannot be decrypted even by cooperation of the user terminal 100-1 and the user terminal 100-2. Consequently, the double-encrypted target data, and the plaintext target data that is the origin thereof accordingly, are shared between the user terminal 100-1 and the user terminal 100-2 in a state of being saved in an unfalsifiable manner.

Meanwhile, the main control unit 121 multicasts the double-encrypted target data assigned again with the two user IDs described above (S808). The multicast process is executed by the main control unit 121 based on the fact that the user has selected the button assigned the characters of YES as described above. To perform multicast, the main control unit 121 transmits data items obtained by removing the key from the data recorded by the main control unit 121 in the first recording unit 123 of the user terminal 100-1, to the transmission and reception unit via the data input/output unit 122 and the interface 114. The data items sent to the transmission and reception unit are sent from the transmission and reception unit to at least one of the recording devices 300 via the network 400. The recording device 300 serving as the destination of these data items may be a device selected by the user of the user terminal 100-1 from among the recording devices 300, a device randomly selected from among the recording devices 300, a device selected by the user terminal 100-1 according to a certain rule, or all the recording devices 300.

The recording device 300, having received the double-encrypted target data assigned the two user IDs, records the received data in the recording unit, not shown. The data may be recorded in the recording unit in a state viewable by a third party via the network 400, which applies to this embodiment. Note that what is in the state viewable by a third party may be only the multi-encrypted target data. The number of recording devices 300 may be only one. If multiple devices reside, multiple (or many) multi-encrypted target data items are recorded in each recording device 300, with the passage of time. In this case, the multi-encrypted target data items recorded in each recording device 300 are not necessarily the same. The multi-encrypted target data items recorded in each recording device 300 may be all the multiple generated multi-encrypted target data items or some of them. The multi-encrypted target data items recorded in multiple recording devices 300 that record only some of items among the multiple generated multi-encrypted target data items may be partially redundant. Alternatively, multi-encrypted target data items different from each other may be recorded.

As a result, the double-encrypted target data assigned the two user IDs is in a state of being shared and saved by the user terminal 100-1 and the user terminal 100-2, which are the two user terminals 100 serving as parties concerned having generated the data, and by a certain number of recording devices 300, for example. Note that the multicast process can be performed only with the double-encrypted target data. Accordingly, the process may be performed by another device holding the double-encrypted target data. For example, instead of the user terminal 100-1, the user terminal 100-2 may perform the multicast process.

Among the steps described above, the processes from S803 pertaining to input of the start information to S807 pertaining to reception of the double-encrypted target data, or the processes from S803 pertaining to input of the start information to S808 pertaining to multicast may be automatically performed by the user terminal 100-1 and the user terminal 100-2, and by the recording device 300 in some cases; this applies to this embodiment, although not limited thereto. This embodiment assumes that the selection information and the start information are input by the user of the user terminal 100-1. Alternatively, for example, all the processes described above may be automatically executed by the user terminal 100-1 and the user terminal 100-2, and by the recording device 300 in some cases, when the target data is generated. In this case, the input of the selection information and the start information by the user may be omitted.

The double-encrypted target data shared by the user terminal 100-1, the user terminal 100-2 and the recording device 300 is not necessarily used at all thereafter. As described later, for example, if the necessity of verifying the content of the target data arises in the future, the data can be used.

In this case, the double-encrypted target data is decrypted and restored to the plaintext target data. The decrypted plaintext target data has the same content as the target data having not been double-encrypted yet has. Accordingly, verification of the past target data based on the decrypted target data causes no error. There is no doubt on the authenticity of the target data.

Note that in this example, what is sent from the user terminal 100-1 or the user terminal 100-2 to the recording device 300 during multicast is the double-encrypted target data assigned the two user IDs. Here, the target data that is the origin of the double-encrypted target data can be added to the data sent from the user terminal 100-1 or the user terminal 100-2 to the recording device 300 during multicast. In this case, what is recorded in the recording unit, which is of the recording device 300 but is not shown, includes the double-encrypted target data assigned the two user IDs, and the target data that is the origin of the double-encrypted target data. The double-encrypted target data, and the target data that is the origin of the double-encrypted target data are recorded in association with each other or as a pair. The double-encrypted target data and the target data that is the origin of the double-encrypted target data, which belong to the same pair or different pairs, are accumulated in the recording unit of each recording device 300. In this case, at least one of the double-encrypted target data and the target data that is the origin thereof may be in a state of being disclosed to other devices via the network 400. If only the user terminal 100-1 holds the plaintext target data during the process of generating the target data (S801), basically only the user terminal 100-1 between the user terminal 100-1 and the user terminal 100-2 can transmit, in addition to the double-encrypted target data, the target data that is the origin thereof, to the recording device 300. If these data items are transmitted from the user terminal 100-2 to the recording device 300, the plaintext target data may be transmitted from the user terminal 100-1 to the user terminal 100-2, or the target data encrypted by the user terminal 100-1 for allowing the user terminal 100-2 to perform decryption may be transmitted from the user terminal 100-1 to the user terminal 100-2 at appropriate timing before the user terminal 100-2 transmits the double-encrypted target data and the target data that is the origin thereof to the recording device 300.

### <Case where two user terminals 100 decrypt saved target data>

The double-encrypted target data is decrypted as follows, for example.

The party intending to verify the double-encrypted target data is, typically, the user of the user terminal 100-1 or the user of the user terminal 100-2.

As described above, the user terminal 100-1 and the user terminal 100-2 hold the double-encrypted target data in a state of being recorded in their first recording units 123. Accordingly, the user may select the double-encrypted data item that the user intends to decrypt, from among data items recorded in the first recording unit 123, exchange the data item between the user terminal 100-1 and the user terminal 100-2, and achieve decryption. Such a process is, typically, executed as an inverse process where the double-encrypted target data is adopted as the target data. Although this embodiment is not limited thereto, the execution applies to this embodiment.

For example, it is assumed that the user of the user terminal 100-2 intends to decrypt the target data double-encrypted with the user terminal 100-1. The user of the user terminal 100-2 selects the double-encrypted target data, using the input device 102 of the user terminal 100-2, for example. As described above, the selected double-encrypted target data is assigned the key used at the time of encryption of the data and the user IDs of the user terminal 100-1 and the user terminal 100-2. The main control unit 121 reads all the data items from the first recording unit 123.

The main control unit 121 transmits the key and the double-encrypted target data among the read data items, to the encryption unit 124. The encryption unit 124 decrypts the double-encrypted target data, using the fixed algorithm and the key provided from the main control unit 121. Accordingly, the double-encrypted target data is decrypted, and the state returns to the state where the target data is encrypted only by the encryption unit 124 of the user terminal 100-1. The encryption unit 124 sends this data together with the double-encrypted data, to the main control unit 121.

The main control unit 121 assigns these data items the user IDs of the user terminal 100-1 and the user terminal 100-2, and sends them to the transmission and reception unit via the data input/output unit 122 and the interface 114. These data items are sent from the transmission and reception unit to the user terminal 100-1 via the network 400.

The user terminal 100-1 receives the data items at the transmission and reception unit. The data that is in the state where the target data encrypted only by the encryption unit 124 of the user terminal 100-1 and is assigned the two user IDs and the double-encrypted target data, is sent from the transmission and reception unit of the user terminal 100-1 to the main control unit 121 via the interface 114 and the data input/output unit 122.

The main control unit 121, having received the data, searches the data items recorded in the first recording unit 123 for the same data as the double-encrypted data. When the same data as the double-encrypted data received from the user terminal 100-2 is found in the first recording unit 123, the main control unit 121 reads the key assigned to the double-encrypted data, from the first recording unit 123. This key is the key used by the encryption unit 124 of the user terminal 100-1 for encrypting the double-encrypted data. The main control unit 121 transmits, to the encryption unit 124, this key, and the data that has been transmitted from the user terminal 100-2 and is in the state of the target data encrypted only by the encryption unit 124 of the user terminal 100-1.

Upon receipt of the data in the state of the target data encrypted only by the encryption unit 124 of the user terminal 100-1 from the main control unit 121, the encryption unit 124 decrypts the data using the fixed algorithm and the key provided from the main control unit 121. Accordingly, the data in the state of the target data encrypted only by the encryption unit 124 of the user terminal 100-1 returns to the plaintext target data.

The encryption unit 124 sends the target data to the main control unit 121. The main control unit 121 records the target data in the first recording unit 123 of the user terminal 100-1. Accordingly, the state comes into a state where target data can be verified.

If required, the target data is sent from the user terminal 100-1 to the user terminal 100-2. Accordingly, the user terminal 100-1 and the user terminal 100-2 come into the state of sharing the target data.

As evidenced by the above description, the transmission of the double-encrypted target data from the user terminal 100-2 to the user terminal 100-1 is for identifying the key to be used by the encryption unit 124 of the user terminal 100-1 to decrypt the data in the state of the target data encrypted only by the encryption unit 124 of the user terminal 100-1. Typically, multi-encrypted target data items other than the double-encrypted target data item generated in corporation with the user terminal 100-2 is recorded in the first recording unit 123 of the user terminal 100-1. Furthermore, the pieces of content and the number of the multi-encrypted target data items that are recorded in the first recording units 123 of many user terminals 100 or recorded in the recording units of the multiple recording devices 300, may vary during operation of the communication system. In such situations, when the user terminal 100-1 decrypts the above-described data received from the user terminal 100-2, the user terminal 100-1 is required to identify the key to be used to decrypt the data. One example to be used for identifying such a key is the aforementioned double-encrypted target data transmitted from the user terminal 100-2 to the user terminal 100-1.

It is therefore necessary to send the data that is in the state of the target data encrypted only by the encryption unit 124 of the user terminal 100-1, from the user terminal 100-2 to the user terminal 100-1. If the identification of the key described above can be achieved by another method, the double-encrypted target data is not required to be transmitted from the user terminal 100-2 to the user terminal 100-1. For example, it is assumed that when the double-encrypted target data is generated, the identifier for identifying the data is generated by, for example, the user terminal 100-2, the main control unit 121 of the user terminal 100-2 assigns the identifier to the double-encrypted target data and records it in the first recording unit 123 while the main control unit 121 of the user terminal 100-1 having received the identifier from the user terminal 100-2 also assigns the identifier to the double-encrypted target data and records it in the first recording unit 123. In this case, when the user terminal 100-2 having decrypted the double-encrypted data sooner sends, to the user terminal 100-1, the data that is in the state of the target data encrypted only by the encryption unit 124 of the user terminal 100-1, the user terminal 100-2 can transmit the identifier instead of the double-encrypted data. The main control unit 121 of the user terminal 100-1 having received these data items can use, as a query, the identifier instead of the double-encrypted target data; the query is for searching the keys recorded in the first recording unit 123, for the key to be used by the encryption unit 124 to decrypt the data that is in the state of the target data encrypted only by the encryption unit 124 of the user terminal 100-1.

Note that the example described above assumes that the user terminal 100-1 and the user terminal 100-2 save the key in the first recording units 123. This is because the key used to double-encrypt the target data is allowed to be identified when the double-encrypted target data is decrypted. If the key can be identified by another method, the data to be recorded in the first recording unit 123 in association with the double-encrypted target data is not necessarily the key data itself and may be any data item allowing the key to be identified. For example, it is assumed that the encryption units 124 of the user terminal 100-1 and the user terminal 100-2 change the key on the basis of the date and time of the encryption. According to such an assumption, both the encryption units 124 can regenerate the key used for the encryption process, only with information on the date and time of generation of the key. In such a case, the first recording unit 123 may adopt, as data on the date and time of the generation of the key, the data recorded in association with the double-encrypted target data instead of the key data. Accordingly, instead of supply of the key data from the main control unit 121, supply of the data on the date and time allows both the encryption units 124 to generate a key that is the same as the key that would have been supplied from the main control unit 121. Consequently, the decryption process can be achieved in a manner indistinguishable from the case described above.

Furthermore, if the key used by both the encryption units 124 is always the same, there is no need at all to identify the key used when the target data was double-encrypted in the past, for decryption by the both the encryption units 124. In such a case, data, such as the key data or the above-described data on the date and time allowing the key to be identified, is not required to be recorded in the first recording unit 123.

In the above example, decryption of the double-encrypted target data is started from the user terminal 100-2 that encrypted the double-encrypted target data at the last time. This is because when certain data is encrypted by different methods multiple times, the original data cannot typically be restored unless the decryption is performed in the inverted order. That is, in the above example, the target data is encrypted by the encryption unit 124 of the user terminal 100-1 and is further encrypted by the encryption unit 124 of the user terminal 100-2. In this case, the data is restored to the original target data, if the double-encrypted target data is decrypted by the encryption unit 124 of the user terminal 100-2 and is further decrypted by the encryption unit 124 of the user terminal 100-1. However, the data is not restored to the original target data if the data is decrypted by the encryption unit 124 of the user terminal 100-1 first and is further decrypted by the encryption unit 124 of the user terminal 100-2.

Accordingly, for example, even if the user of the user terminal 100-1 intends to decrypt the double-encrypted target data described above, decryption of the double-encrypted target data is required to be started by the encryption unit 124 of the user terminal 100-2 first. The user terminal 100-1 requests the user terminal 100-2 to decrypt the double-encrypted target data while specifying the double-encrypted target data intended to be decrypted. The user terminal 100-1 may send, to the user terminal 100-2, the double-encrypted target data recorded in the first recording unit 123 of the user terminal 100-1 as the data for identifying the double-encrypted target data. If the above-described identifier commonly held by the user terminal 100-1 and the user terminal 100-2 exists, the identifier may be sent to the user terminal 100-2. The flow of the process of decrypting the double-encrypted target data to be started from the user terminal 100-2 is the same as that in the case described above.

Note that when the double-encrypted target data is decrypted in the communication system in this embodiment, preparation should be made such that the user terminals 100 having performed encryption to achieve the double-encrypted target data and the order of the encryption can be grasped in the case of need of decryption. In consideration of such points, based on the order of data items that are the user IDs of the user terminal 100-1 and the user terminal 100-2 assigned to the double-encrypted target data in the first recording units 123 of the user terminal 100-1 and the user terminal 100-2, the order of encryption by the user terminal 100-1 and the user terminal 100-2 is required to be grasped. Otherwise, data indicating the user terminals 100 having performed encryption to achieve the double-encrypted target data and the order of the encryption is required to be assigned alternatively.

Likewise, when the user, the administrator or the like of each recording device 300 intends to decrypt multi-encrypted target data recorded in the recording unit of the recording device 300, the user or the administrator specifies the multi-encrypted target data on which he/she intends to request decryption, and requests the user terminal 100 that encrypted the multi-encrypted target data at the last time, to decrypt the multi-encrypted target data. When a certain user, administrator or the like intends to decrypt the double-encrypted target data described above, the user, administrator or the like specifies the double-encrypted target data on which he/she intends to request decryption, and requests the user terminal 100-2, which is the user terminal 100 that encrypted the double-encrypted target data at the last time, to decrypt the double-encrypted target data. The flow of the process of decrypting the double-encrypted target data to be started from the user terminal 100-2 is the same as that in the case described above. Alternatively, when a third party monitoring the multi-encrypted target data that is recorded in the recording unit of the recording device 300 intends to decrypt certain multi-encrypted target data, the third party may also specify the multi-encrypted target data on which the third party intends to request decryption, and request the user terminal 100 that encrypted the multi-encrypted target data at the last time, to decrypt the multi-encrypted target data.

### <Case where three or more user terminals 100 save target data>

A case where three user terminals 100 save the target data is described. Although not limited thereto, the following description is made assuming that a user terminal 100-1, a user terminal 100-2 and a user terminal 100-3 are the three user terminals 100 in this case.

In this case, at least one of the user terminal 100-1, the user terminal 100-2 and the user terminal 100-3 is in a state of holding the target data. The target data in this case is, typically, based on a three-party agreement among the user terminal 100-1, the user terminal 100-2 and the user terminal 100-3. However, the target data is not limited thereto.

The target data may be generated in any one of the user terminal 100-1, the user terminal 100-2 and the user terminal 100-3, generated for example simultaneously in at least two of the user terminal 100-1, the user terminal 100-2 and the user terminal 100-3, or generated in another device other than the user terminal 100-1, the user terminal 100-2 and the user terminal 100-3. The target data is not necessarily newly generated data, and may be data that at least one of the user terminal 100-1, the user terminal 100-2 and the user terminal 100-3 have previously held.

In this case, it is assumed that the target data exists only in the user terminal 100-1.

Hereafter, the target data is encrypted by the encryption unit 124 of the user terminal 100-1 first, and is subsequently encrypted by the encryption units 124 of the user terminal 100-2 and the user terminal 100-3. Similar to the case where the target data is double-encrypted with the user terminal 100-2, for example, the user ID can be used for selection of the user terminal 100-2 and the user terminal 100-3, which are user terminals 100 to encrypt the target data together with the user terminal 100-1, and for transmission of the encrypted target data to the user terminal 100-2 and the user terminal 100-3.

While the device that performs encryption first is freely selected between the encryption unit 124 of the user terminal 100-2 and the encryption unit 124 of the user terminal 100-3, the target data is encrypted by all the encryption units 124 of the user terminal 100-1, the user terminal 100-2 and the user terminal 100-3 as a result. It is simple that for example, the user terminal 100-1 including the encryption unit 124 to perform encryption first determines the order of encryption in the encryption units 124 of the user terminal 100-1, the user terminal 100-2 and the user terminal 100-3. Alternatively, the order may be determined by the user terminal 100-2 or the user terminal 100-3. Further alternatively, the order may be determined collectively by the user terminal 100-1, the user terminal 100-2 and the user terminal 100-3 (or the users thereof), or determined randomly. The situations similarly apply to a case of two user terminals 100, and also to four or more user terminals 100.

Multi-encrypted (triple-encrypted) target data achieved through encryption sequentially by all the encryption units 124 of the user terminal 100-1, the user terminal 100-2 and the user terminal 100-3 is recorded in all the first recording units 123 of the user terminal 100-1, the user terminal 100-2 and the user terminal 100-3. Similar to the description of <Case where two user terminals 100 save target data>, data to be herein recorded together with the triple-encrypted target data in the three first recording units 123 is data required by the user terminal 100-1, the user terminal 100-2 and the user terminal 100-3 to decrypt the triple-encrypted target data thereafter. For example, in the three first recording units 123 of the user terminal 100-1, the user terminal 100-2 and the user terminal 100-3, the user IDs of the three user terminals 100 are recorded together with the triple-encrypted target data. Similar to the above case, it is also preferable that these three user IDs be arranged so as to indicate the order of encryption of the triple-encrypted target data by the user terminal 100-1, the user terminal 100-2 and the user terminal 100-3.

At least one of the user terminal 100-1, the user terminal 100-2 and the user terminal 100-3 that share the triple-encrypted target data can perform a multicast process. In this case, the data including the triple-encrypted target data identical to that recorded in the first recording units 123 of the user terminal 100-1, the user terminal 100-2 and the user terminal 100-3, is recorded in at least one of the recording units of the recording devices 300.

Not only the triple-encrypted target data but also the target data that is the origin thereof is adopted as multicast targets, and the recording unit of the recording device 300 can be brought into a state where plaintext target data can also be written; this applies to the case of two user terminals 100 and also to the case of three user terminals 100.

Similar to the description of <Case where two user terminals 100 decrypt saved target data>, the triple-encrypted target data recorded in the first recording units 123 of the user terminal 100-1, the user terminal 100-2 and the user terminal 100-3 is decrypted by the encryption units 124 of the user terminals 100 in an inverted order of encryption of the target data that is the origin of the triple-encrypted target data. Accordingly, the triple-encrypted target data is restored to the original target data.

This also applies to handling of the triple-encrypted target data recorded in the recording device 300.

In the above example, the number of user terminals 100 that encrypt the target data is three. Likewise, the description applies also to the case where the number is four, five or M.

In the case where M user terminals 100 save certain target data, the target data or encrypted data thereof is encrypted by all the encryption units 124 of the M user terminals 100 while being transmitted and received between the M user terminals 100. Accordingly, M-fold multiple-encrypted target data is shared among the M user terminals 100, and is recorded in the first recording units 123 of the M user terminals 100. Data to be recorded in the first recording units 123 of the M user terminals 100 together with the M-fold multiple-encrypted target data is data required for decryption, as described above.

Similar to the case described above, the M-fold multiple-encrypted target data recorded in the first recording units 123 of the M user terminals 100 is decrypted by the encryption units 124 of the user terminals 100 in an inverted order of encryption of the target data that is the origin of the M-fold multiple-encrypted target data. Accordingly, the M-fold multiple-encrypted target data is restored to the original target data.

This also applies to handling of the M-fold multiple-encrypted target data recorded in the recording device 300.

### <<Second Embodiment>>

A communication system of a second embodiment is described.

The communication system in the second embodiment is substantially identical to the communication system in the first embodiment. Similar to the case of the first embodiment, the communication system in the second embodiment includes many user terminals 100 connected to the network 400, and many, at least a plurality of, recording devices 300.

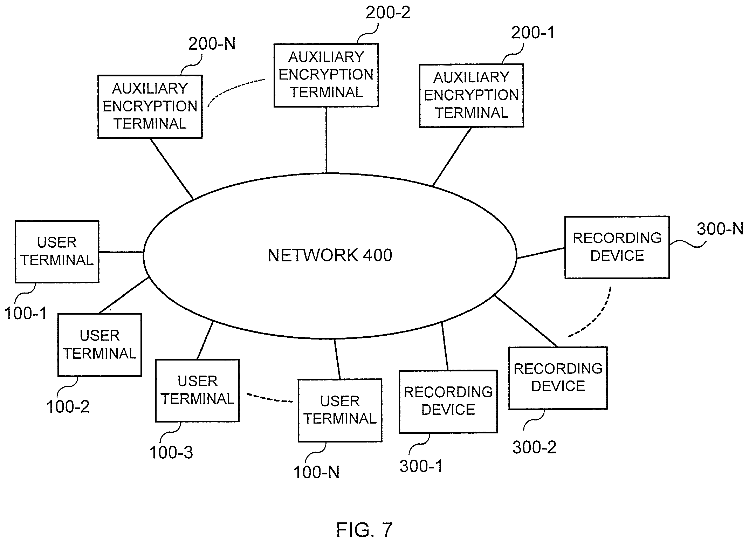

As shown in FIG. 7, the communication system in the second embodiment is different from the communication system in the first embodiment in that the communication system in the second embodiment includes many, or a plurality of, auxiliary encryption terminals 200, which do not exist in the case of the first embodiment. In view of the configuration, the second embodiment and the first embodiment are different only in this point.

The configurations and operations of the auxiliary encryption terminal 200-1 to the auxiliary encryption terminal 200-N may be the same in consideration of the relationship with the invention of the present application; this applies to this embodiment.

The auxiliary encryption terminal 200 corresponds to an auxiliary communication device in the invention of the present application. It can be assumed that the auxiliary encryption terminal 200 has only some of functions of the user terminal 100. To put it plainly, the user terminal 100 has a function of determining target data, a function of executing one encryption process during execution of multiple encryption of the target data, a function of saving multi-encrypted target data, and a function of executing one decryption process during decryption of the multi-encrypted target data. Among these functions, the functions necessary for the auxiliary encryption terminal 200 are only the function of executing one encryption process during multiple encryption of the target data, and the function of executing one decryption process during decryption of the multi-encrypted target data.

As described in the first embodiment, the target data is what the users of the multiple user terminals 100 intend to save. That is, the user of the user terminal 100 can be a party motivated to save the target data, and typically, a party having an interest on the content of the target data. On the contrary, the auxiliary encryption terminal 200 or its user or administrator is not necessarily motivated to save the target data. In the first embodiment, multi-encryption of the target data is performed by the multiple user terminals 100 whose users have the statuses of parties concerned. In the second embodiment, not only the user terminals 100 but also the auxiliary encryption terminals 200 participate in multiple encryption of the target data. To allow participation of multi-encryption of the target data, the auxiliary encryption terminal 200 requires the function of executing one encryption process during multi-encryption of the target data, as described above. To decrypt the multi-encrypted target data with participation by not only the multiple user terminals 100 but also the auxiliary encryption terminals 200, the multi-encrypted target data cannot be restored to the plaintext target data unless not only the multiple user terminals 100 but also the auxiliary encryption terminals 200 participate. To achieve this, the auxiliary encryption terminal 200 requires the function of one decryption process during decryption of the multi-encrypted target data, as described above.

For example, the auxiliary encryption terminal 200 may be a device managed by a user having a public status, such as of a notary public. Alternatively, the auxiliary encryption terminal 200 may be the user terminal 100 itself, and the function of the auxiliary encryption terminal 200 described later may be achieved by the user terminal 100. The recording device 300 may also have the functions of the auxiliary encryption terminal 200. The following description is made assuming that in this embodiment, only users having a status such as of a notary public, have the auxiliary encryption terminals 200.

The hardware configuration of the auxiliary encryption terminal 200 may be the same as that of the user terminal 100. This applies to this embodiment. The functions required by the auxiliary encryption terminal 200 are some of the functions of the user terminal 100, as described above. Accordingly, the functional blocks generated in the auxiliary encryption terminal 200 may be some of the functional blocks generated in the user terminal 100. Although not limited thereto, in this embodiment, the functional blocks show in FIG. 4 that are the same as those residing in the user terminal 100 are generated in the auxiliary encryption terminal 200.

The functions of the functional blocks generated in the auxiliary encryption terminal 200 are the same as the functions of the functional blocks generated in the user terminal 100. Note that the main control unit 121 is not required to deal with the selection information and the start information. Accordingly, the main control unit 121 of the auxiliary encryption terminal 200 does not have the function of dealing with the selection information and the start information that the main control unit 121 of the user terminal 100 has, the function having been described in the first embodiment. As described above, the auxiliary encryption terminal 200 requires the function of executing one encryption process during multi-encryption of the target data during multi-encryption of the target data, and the function of executing one decryption process during decryption of the multi-encrypted target data. Similar to the case of the user terminal 100, such functions are guaranteed by the encryption unit 124 of the auxiliary encryption terminal 200. That is, the encryption unit 124 of the auxiliary encryption terminal 200 has a function of encrypting data, and a function of decrypting data encrypted by the encryption unit 124. Similar to the user terminal 100 described in the first embodiment, the encryption unit 124 of the auxiliary encryption terminal 200 may always perform decryption and encryption by the same method. In some cases, for example, the methods of encryption and decryption may be changed every time encryption and decryption of target data or the like are performed (e.g., the key is changed). Note that the processes of encryption and decryption executed by the encryption unit 124 of each auxiliary encryption terminal 200 and the encryption unit 124 of each user terminal 100 are unique to each other.

A method of using the communication device and operations thereof in the second embodiment are described.

For example, a case where two user terminals 100 save the target data is described. Similar to the case of the first embodiment, the devices saving the target data are the user terminal 100-1 and the user terminal 100-2.

Similar to the case of the first embodiment, first, at least one of the user terminal 100-1 and the user terminal 100-2 is in the state of holding the target data. Similar to the first embodiment, the second embodiment also assumes that the target data exists only in the user terminal 100-1.

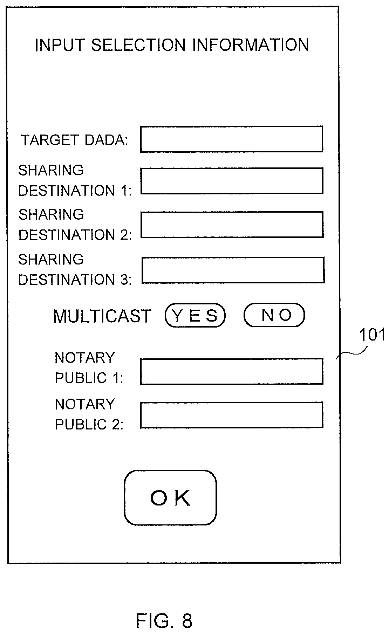

The target data is, for example, in a state of being recorded in the first recording unit 123 of the user terminal 100-1. Here, the user of the user terminal 100-1 inputs selection information that is a combination of information specifying the target data to be saved, and a user intending to share and save the target data or data that identifies his/her user terminal 100. When the selection information is input, for example, an image for prompting the user to input the selection information is displayed on the display 101 of the user terminal 100-1, as shown in FIG. 8. The image for prompting the user to input the selection information includes: characters of Target data, and a landscape rectangular frame corresponding thereto; characters of Sharing destination(s) 1 to 3, and landscape rectangular frames corresponding thereto; characters of Multicast, and buttons assigned characters of YES and NO; and a button assigned characters of OK. All of them, including the functions assigned thereto, are the same as those in the first embodiment. In addition to those described above, the image in the second embodiment further includes characters of Notary public 1 and Notary public 2, and landscape rectangular frames respectively arranged horizontally next to them.

The frames residing next to the characters of Notary public 1 and Notary public 2 are for allowing the user of the user terminal 100-1 to select whether not only the user terminal 100 but also the auxiliary encryption terminal 200 owned by the user having a status such as of a notary public are allowed to participate in the step of multi-encrypting the target data when the target data is encrypted. If one auxiliary encryption terminal 200 is allowed to participate in the step of multi-encrypting the target data, the user of the user terminal 100-1 inputs information for specifying the auxiliary encryption terminal 200 of the notary public (e.g., the user ID identifying the notary public) in the frame right to the characters of Notary public 1. Alternatively, if two auxiliary encryption terminals 200 are allowed to participate in the step of multi-encrypting the target data, the user inputs information for specifying the auxiliary encryption terminals 200 of the two notaries public in the frames right to the characters of Notary public 1 and Notary public 2, respectively. It is a matter of course that to allow more auxiliary encryption terminals 200 to participate in the step of multi-encrypting the target data, more frames for allowing writing for notaries public may be prepared, or the number of frames can be increased based on the intention of the user. The aforementioned information on whether to allow the auxiliary encryption terminal 200 of the notary public to participate in the step of multi-encrypting the target data or not, and on which auxiliary encryption terminal 200 is allowed to participate in the step if the participation is allowed, constitutes a part of the selection information. Although not limited thereto, this embodiment assumes that the user ID of the notary public that is information for selecting the auxiliary encryption terminal 200-1 is written in the frame right to the Notary public 1.

After completion of the entire input described above, the user clicks the button assigned the characters of OK. When input to the button assigned the characters of OK is performed, input of the selection information described above and input of the information about selection of whether multicast is performed or not are executed. Input to the button assigned the characters of OK also serves as input of the start information.

When the user of the user terminal 100-1 clicks the button assigned the characters of OK, the selection information, the information on the necessity of multicast, and the start information are generated. These pieces of information are sent from the input device 102 to the data input/output unit 122 of the control unit 120 through the interface 114 and then sent to the main control unit 121. The processes thereafter are substantially similar to those in the first embodiment. In particular, the processes in the case where no auxiliary encryption terminal 200 is allowed to participate in the process of multi-encrypting the target data are not different from those in the first embodiment at all.

Upon receipt of the selection information, the main control unit 121 reads, from the first recording unit 123, data specified by the information written in the frame indicated horizontally next to the characters of Target data on the display 101 among the pieces of the selection information, as the target data. Such data is plaintext data. This is hereinafter dealt with as the target data.

The main control unit 121 sends the target data read from the first recording unit 123 to the encryption unit 124. The encryption unit 124 having received the data encrypts the received target data. The target data encrypted by the encryption unit 124 is subsequently sent to one of the user terminal 100-2 and the auxiliary encryption terminal 200-1, encrypted by the one of the user terminal 100-2 and the auxiliary encryption terminal 200-1, then sent to the other of the user terminal 100-2 and the auxiliary encryption terminal 200-1, and encrypted by the encryption unit 124 of the other of the user terminal 100-2 and the auxiliary encryption terminal 200-1. The thus generated multi-encrypted (triple-encrypted) target data is transmitted and received between the user terminal 100-1, the user terminal 100-2 and the auxiliary encryption terminal 200-1, irrespective of the path of the transmission and reception. Resultantly, the data is shared among the user terminal 100-1, the user terminal 100-2 and the auxiliary encryption terminal 200-1. The triple-encrypted target data is recorded in the first recording units 123 of the user terminal 100-1, the user terminal 100-2 and the auxiliary encryption terminal 200-1, for example. The data for specifying information required to decrypt the multi-encrypted target data thereafter as described in the first embodiment is recorded together with the multi-encrypted target data, in the three first recording units 123. However, as described above, the auxiliary encryption terminal 200 participates in the process of multi-encrypting the target data, and the process of decrypting the multi-encrypted target data, but is not required to save the target data. Accordingly, if the data for specifying the information required to decrypt the multi-encrypted target data is recorded in the first recording unit 123 of the auxiliary encryption terminal 200, the multi-encrypted target data is not necessarily recorded.

Similar to the case of the first embodiment, the multicast process is performed as required. In the second embodiment, the multicast process is not necessarily performed by the user terminal 100-1 and the user terminal 100-2. If the multi-encrypted target data is held by the auxiliary encryption terminal 200-1, the process may be performed by the auxiliary encryption terminal 200-1.

The method of using the thus generated multi-encrypted target data is similar to the case of the first embodiment. However, not only the user terminal 100-1 and the user terminal 100-2 but also the auxiliary encryption terminal 200-1 is required to participate in the step of decrypting the multi-encrypted target data in this case.

Note that the second embodiment assumes that at least one auxiliary encryption terminal 200 allowed to participate in the step of multi-encrypting the target data is determined by the user terminal 100 that is to encrypt the target data first. However, such an auxiliary encryption terminal 200 is not necessarily determined by the first user terminal 100, and may be determined through cooperation with another user terminal 100 or multiple user terminals 100. At least one auxiliary encryption terminal 200 participating in the step of multi-encrypting the target data can be determined such that, for example, the users of the user terminals 100 participating in the step of multi-encrypting the target data determine by themselves at least one auxiliary encryption terminal 200 allowed to participate in the step of multi-encrypting the target data, and the necessity of participation. Accordingly, the user of each user terminal 100 can allow the auxiliary encryption terminal 200 trusted by the user to participate in the step of multi-encrypting the target data. For example, when each user terminal 100 participates in the process for multi-encrypting the target data, the user terminal 100 can select the auxiliary encryption terminal 200 necessarily allowed to participate in the process. Alternatively, when multiple user terminals 100 try to save the target data, at least one auxiliary encryption terminal 200 to participate in the process for multi-encrypting the target data may be automatically determined irrespective of the intention of the user of each user terminal 100.

Note that the method of using and the operations of the communication system in the second embodiment similarly apply to a case where the number of user terminals 100 intending to save the target data is three or more.

For example, it is assumed that the number of user terminals 100 intending to save the target data is four, and the user of each user terminal 100 sets one different auxiliary encryption terminal 200 so as to participate in the step of multi-encrypting the target data. Accordingly, provided that a certain user terminal 100 starts the first encryption process for multi-encrypting the target data, the target data is subsequently, further encrypted by three user terminals 100 and four auxiliary encryption terminals 200. The resultantly multi-encrypted target data is eight-fold multiple-encrypted target data. In this case, the order of encryption processes of the three user terminals 100 and the four auxiliary encryption terminals 200 is freely determined. There are 7! possible such orders. The order may be determined by the user terminal 100 that is to execute the encryption process first, determined by cooperation among the four user terminals 100, determined by cooperation among the four user terminals 100 and the four auxiliary encryption terminals 200, or further alternatively, determined by another method.

### <Modification Example 1>

Modification Example 1 is achieved by adding some modification to the first embodiment. However, Modification Example 1 is not different from the first embodiment in points that are not specifically referred to. Also in the communication system of Modification Example 1, many user terminals 100 and recording devices 300 connectable to the network 400 are used. In the first embodiment, multiple or many recording devices 300 are thus adopted. In Modification Example 1, at least one recording device 300, which can be a single, is adopted.

The difference between Modification Example 1 and the first embodiment is the difference of the recording device 300. Similar to the case of the first embodiment, double-encrypted (or multi-encrypted, which similarly applies hereinafter in Modification Example 1) target data is recorded in the recording device 300 in Modification Example 1. Unlike the case of the first embodiment, the double-encrypted target data is recorded in a state of being included in a block chain.

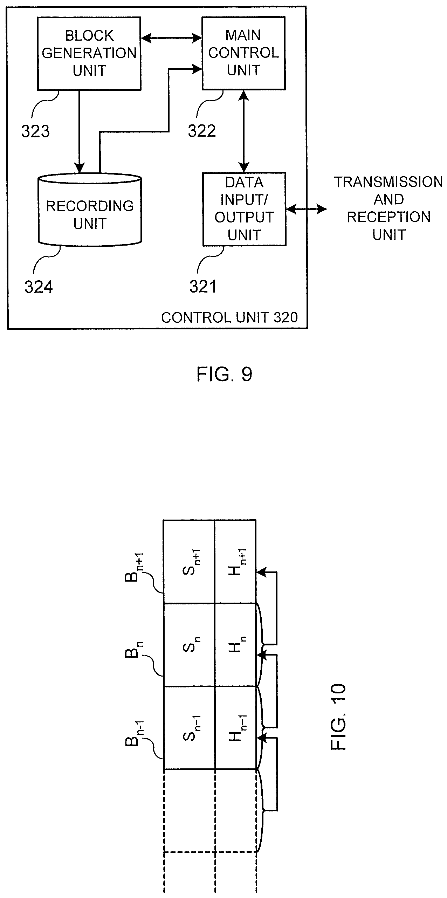

The recording device 300 in Modification Example 1 is configured basically as with the recording device 300 in the first embodiment. In particular, the hardware configuration may be the same as that of the first embodiment. Meanwhile, the recording device 300 in Modification Example 1 requires a block chain, or a function of generating a new block. In the recording device 300 in Modification Example 1, for example, functional blocks are generated as shown in FIG. 9. Such functional blocks are generated in a large-capacity recording medium by the CPU executing a computer program recorded in the large-capacity recording medium.

A control unit 320 that includes a data input/output unit 321, a main control unit 322, a block generation unit 323, and a recording unit 324 is generated in the recording device 300.

The data input/output unit 321 receives data input into the control unit 320, or outputs data from the control unit 320 to the outside. The data input/output unit 321 is configured to send data received from a transmission and reception unit, described later, to the main control unit 322, and is configured to send data received from the main control unit 322 to the transmission and reception unit. The data input/output unit 321 in Modification Example 1 is at least configured to exchange data with the transmission and reception unit that resides outside of the control unit 320. As with the transmission and reception unit in the user terminal 100 or the auxiliary encryption terminal 200, the transmission and reception unit in the recording device 300 has a function of communicating with another device connected to the network 400 via the network 400. The data input from the transmission and reception unit into the data input/output unit 321 is the double-encrypted target data assigned the two user IDs sent from the user terminal 100 by the multicast process. When the double-encrypted target data is required to be verified, a request for transmission of the double-encrypted target data is sent by a device of a third party to the recording device 300, in some cases. Data on such a request is also sent from the transmission and reception unit to the data input/output unit 321. Meanwhile, data sent from the data input/output unit 321 to the transmission and reception unit is the double-encrypted data assigned the two user IDs. As described above, when the target data is required to be verified by the third party monitoring the target data, data on the request for transmission from the recording device 300 to the device of the third party is transmitted in some cases. When the data on such a request is received by the recording device 300, data corresponding to the request is transmitted from the data input/output unit 321 to the transmission and reception unit, as described later. The data is transmitted from the transmission and reception unit to the device of the third party.

The main control unit 322 has a function of overall control of the functional blocks in the control unit 320. Upon receipt of the double-encrypted data assigned the two user IDs from the data input/output unit 321, the main control unit 322 transmits the received data to the block generation unit 323. When transmission of the double-encrypted target data serving as a data verification target is requested by the device of the third party, for example, the user terminal 100 of a user unrelated to generation of the target data serving as a data verification target, the main control unit 322 reads the double-encrypted target data identified by the request, and the user ID assigned thereto, from the recording unit 324. The main control unit 322 transmits the data read from the recording unit 324 to the data input/output unit 321.

The block generation unit 323 has a function of generating a new block and recording the block in the recording unit 324. The method of the block generation unit 323 generating a new block can conform to a publicly known or well-known method. For example, a method of generating a new block in a block chain of bitcoin can be adopted as a method executed by the block generation unit 323 to generate a new block. The block generation unit 323 transmits the generated new block to the recording unit 324. The block generation unit 323 records, in the recording unit 324, the generated new block in a state of being connected to the immediately previous block.

The recording unit 324 records the block generated by the block generation unit 323. The blocks recorded in the recording unit 324 are sequentially connected in the order of their generation. That is, a block chain is recorded in the recording unit 324.

A method of using the communication system and operations thereof in Modification Example 1 are described.

All the processes up to and including multicast of the communication system in Modification Example 1 are not different from those in the first embodiment, irrespective of whether the number of user terminals 100 saving the target data is two or three.

It is assumed that multicast is started from a certain user terminal 100, and the double-encrypted target data assigned the user IDs is transmitted to a certain recording device 300.

Accordingly, the recording device 300 receives, at its transmission and reception unit, the double-encrypted target data assigned the user IDs. Note that in the following description, the double-encrypted (multi-encrypted) target data is called "encryption target data." The encryption target data assigned the user IDs is sent from the transmission and reception unit to the data input/output unit 321, and then is sent from the data input/output unit 321 to the main control unit 322.

Upon receipt of the encryption target data, the main control unit 322 sends the data to the block generation unit 323. The block generation unit 323, having received the data, generates a new block. Data on blocks are schematically illustrated in FIG. 10. Each block B includes a recording space S that records encryption target data C, and an operation value H that is a value obtained by applying a certain operation to the immediately previous block. For example, the operation value H is a hash value obtained by applying a hash operation to the immediately previous block.

For example, it is assumed that the blocks to the n-th block Bₙ have already been generated, and the block generation unit 323 newly generates the (n+1)-th block Bₙ₊₁. The blocks B from B₁ to Bₙ are connected sequentially in the generated order, and constitute what is called a block chain. To generate the block Bₙ₊₁ newly, the block generation unit 323 reads data on the block Bₙ from the recording unit 324 and applies, for example, a hash operation to the data on the block Bₙ, thereby obtaining an operation value Hₙ₊₁ that is a hash value. The block generation unit 323 writes, in the recording space Sₙ₊₁, the encryption target data assigned the user IDs received from the main control unit 322, and adds the operation value Hₙ₊₁ to the recording space Sₙ₊₁, thereby generating data on the new block Bₙ₊₁. The block generation unit 323 then records, in the recording unit 324, the new block Bₙ₊₁ in a state of being connected to the block Bₙ.

Also in Modification Example 1, the processes described in <Case where two user terminals 100 decrypt saved target data> in the first embodiment can be executed basically in a similar manner as that in the first embodiment. When the user terminal 100 having participated in the generation of the encryption target data decrypts the encryption target data, the user terminal 100 may decrypt the encryption target data held by the user terminal 100 concerned as with the case in the first embodiment. The encryption target data recorded in the recording unit 324 of the recording device 300 is not used.

Meanwhile, when the user terminal 100 or the like having participated in the generation of the encryption target data decrypts the encryption target data, a request for transmitting the encryption target data is sent by the user terminal 100 or the like to the recording device 300. It is a matter of course that such a request includes information specifying the encryption target data to be transmitted. Such a request is received by the transmission and reception unit of the recording device 300. Such a request is sent from the transmission and reception unit to the data input/output unit 321 and then to the main control unit 322. The main control unit 322 reads the encryption target data specified by the request, from the block chain recorded in the recording unit 324. Such encryption target data is sent to the transmission and reception unit via the data input/output unit 321, and is then to the user terminal 100 or the like in a manner similar to that in the first embodiment. The request of the decryption issued by the user terminal 100 or the like to the user terminal 100 capable of decrypting the encryption target data, and the processes thereafter are the same as those in the first embodiment.

Note that the above description on Modification Example 1 assumes that the number of encryption target data items included in one recording space S of the block B is one. Alternatively, multiple encryption target data items may be included in one recording space S of the block B. For example, instead of the block generation unit 323 generating a new block B every time the encryption target data is received from the main control unit 322, for example, the block generation unit 323 may generate a new block B every time a predetermined number of encryption target data items are received from the main control unit 322 or every time a predetermined time period elapses after generation of the immediately previous block B, and may write all the encryption target data items assigned the user IDs received from the main control unit 322 after generation of the previously generated block B, in the recording space S of the new block B. In the latter case, the number of encryption target data items written in the recording space S is sometimes zero or one. However, such a configuration allows the number of encryption target data items included in the recording space S of the block B to be more than one.

As described in the first embodiment, not only the encryption target data but also the original target data is sometimes sent from the user terminal 100 to the recording device 300. In this case, not only the encryption target data assigned the user IDs, but also the encryption target data and the original target data, are recorded in the recording space S of each block. In this case, both the data items are in a state of being associated with each other. In some cases, multiple encryption target data items are recorded in the recording space S as described above. In these cases, such association is necessary.

### <Modification Example 2>

A communication system according to Modification Example 2 is rarely different from the communication system in Modification Example 1. Modification Example 2 is not different from the Modification Example 1 in points that are not specifically referred to.

Similar to the case in Modification Example 1, the communication system in Modification Example 2 also includes many user terminals 100 and one or more recording devices 300, which can be connected to the network 400. Similar to the case in Modification Example 1, also in the recording device 300 in Modification Example 2, the encryption target data is recorded in the recording device 300 in a state of being included in the blocks constituting the block chain.

In the communication system in Modification Example 2, a new block including the encryption target data is generated by the user terminal 100. In this point, the communication system in Modification Example 2 is different from the communication system in Modification Example 1 where the new block is generated by the recording device 300.

The configuration of the user terminal 100 in Modification Example 2 is described. In view of the hardware configuration, the user terminal 100 in Modification Example 2 is the same as the user terminal 100 in Modification Example 1. The difference is in functional blocks generated therein. The functional blocks generated in the user terminal 100 in Modification Example 2 are described.

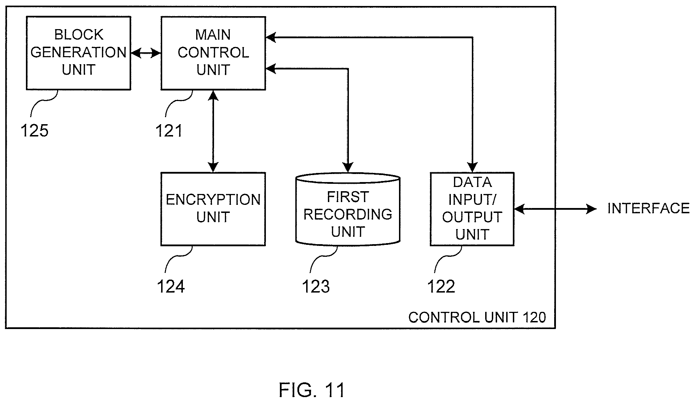

The functional blocks generated in the user terminal 100 in Modification Example 2 are rarely different from the functional blocks generated in the user terminals 100 according to Modification Example 1 and the first embodiment. The functional blocks generated in the user terminal 100 in Modification Example 2 include a block generation unit 125 (FIG. 11) that does not exist in the case of Modification Example 1.

Similar to the block generation unit 323 that is in the recording device 300 in Modification Example 1 described in Modification Example 1, such a block generation unit 125 has a function of generating a new block to be connected to the block chain. It is described later how the block generation unit 125 generates a block.

The recording device 300 in Modification Example 2 is configured basically similar to that of the recording device 300 in the first embodiment. The encryption target data assigned the user IDs is recorded in the recording unit, similar to the recording device 300 in the first embodiment. However, in Modification Example 2, as described above, the encryption target data is recorded in a state of being included in the recording space of the blocks constituting the block chain; in this point, the example is different from the first embodiment.

Next, a method of using the communication system and operations thereof in Modification Example 2 are described.

Similar to the case in Modification Example 1, the method of using the communication system and operations thereof in Modification Example 2 is not different from the first embodiment only in that the encryption target data is shared by the user terminals 100 of multiple users intending to save the target data.

One of the user terminals 100 sharing the encryption target data in the communication system in Modification Example 2 tries to perform multicast, similar to the user terminal 100 in the first embodiment or Modification Example 1.

Similar to the first embodiment, the main control unit 121 of the user terminal 100 that tries to perform multicast in the communication system in Modification Example 2 reads the encryption target data assigned the user IDs from the first recording unit 123. Meanwhile, the main control unit 121 generates a request for transmitting the latest one of the blocks constituting the block chain recorded in the recording unit of the recording device 300 from the recording device 300 serving as a multicast target, and transmits the request to the recording device 300 via the data input/output unit 122, the transmission and reception unit, and the network 400. The recording device 300 having received the request sends the latest block data to the user terminal 100 via the network 400. In a case where the number of recording devices 300 serving as multicast targets is more than one, data on the block is transmitted from the recording devices 300 to the user terminal 100. The latest blocks included in the block chain recorded in the recording units of the recording devices 300 are different among the recording devices 300 in some cases. In these cases, the data items on the blocks transmitted from the recording devices 300 are different from each other.

The data on the blocks is received by the transmission and reception unit of the user terminal 100, and is sent to the main control unit 121 via the data input/output unit 122. Accordingly, the main control unit 121 of the user terminal 100 in Modification Example 2 is in a state of saving the encryption target data assigned the user IDs and the data on the immediately previous block among the blocks constituting the block chain. Such a state is the same as the state of the block generation unit 323 in the recording device 300 in Modification Example 1 immediately before generation of the new block. That is, the block generation unit 125 in Modification Example 2 can generate a new block by the same method as that of the block generation unit 323 in Modification Example 1. The block generation unit 125 in Modification Example 2 thus generates data on the new block. Upon acceptance of the data items on the blocks from the recording devices 300 from the main control unit 121, the block generation unit 125 generates data items on the new blocks of the recording devices 300 on the basis of the data items on the blocks.

After generation of each data item on the new block, the block generation unit 125 sends it to the main control unit 121. If multiple data items on the new blocks are generated, all of them are sent to the main control unit 121. Under control of the main control unit 121, the data items on the new blocks are sent to the respective recording devices 300, for example.

Each recording device 300 connects the new block sent from the user terminal 100, to the latest block of the block chain recorded in the corresponding recording unit, and records the connected block. The thus updated block chain can be the same as that in Modification Example 1; this applies to Modification Example 2.

In Modification Example 2, the processes described in <Case where two user terminals 100 decrypt saved target data> in the first embodiment are the same as the processes described in Modification Example 1.

### <Modification Example 3>

Modification Example 3 is a communication system obtained by modifying the recording device 300 according to the second embodiment to the recording device 300 in Modification Example 1.

The recording device 300 in Modification Example 3 generates a new block on the basis of the encryption target data assigned the user IDs accepted not only from the user terminal 100 but also from the auxiliary encryption terminal 200, and connects the block to the immediately previous end block of the block chain, in some cases. The user terminal 100 and the auxiliary encryption terminal 200 send the encryption target data assigned the user IDs, and the target data that is the origin of the encryption target data, to the recording device 300, in some cases. Irrespective of reception from which one of the user terminal 100 and the auxiliary encryption terminal 200, the recording device 300 records, in its recording unit, the user ID, the encryption target data, and the target data that is the origin of the encryption target data, in a state of being associated with each other.

The operations of and the method of using the communication system in Modification Example 3 conform to those in Modification Example 1. Accordingly, the description thereof is omitted.

### <Modification Example 4>

Modification Example 4 is a communication system obtained by modifying the user terminal 100 and the auxiliary encryption terminal 200 according to the second embodiment to the user terminal 100 in Modification Example 2. The recording device 300 is similar to the recording device 300 in Modification Example 2.

Similar to the case in Modification Example 2, the user terminal 100 or the auxiliary encryption terminal 200 in Modification example 4 generates a new block immediately before multicast. The data on block is the same as that generated in Modification Example 2. The new block is sent to each recording device 300 from the user terminal 100 or the auxiliary encryption terminal 200. Similar to the case in Modification Example 2, each recording device 300 connects the new block received from the user terminal 100 or the recording device 300, to what is positioned at the end among the blocks constituting the block chain recorded in the recording unit.

The operations of and the method of using the communication system in Modification Example 4 conform to those in Modification Example 2. Accordingly, the description thereof is omitted.

## Claims

1. A method executed by a plurality of communication devices that are communicable with each other via a predetermined network, each of the devices including an encryption unit configured to be capable of encrypting predetermined data in a decryptable manner according to a method different from methods of the other devices, one of the devices holding target data that is data all of users of the devices intend to save, the method comprising:
an encryption step of causing all the communication devices to transmit and receive the target data or data obtained by encrypting the target data, to or from each other via the network, while causing the encryption units included in the communication devices to encrypt the data one after another; and
a sharing step of causing all the communication devices to share the target data encrypted by all the encryption units of the communication devices, by transmitting and receiving the data via the network.

2. The method according to claim 1,
wherein in the encryption step, all of one or more auxiliary communication devices, and all of the communication devices transmit and receive the target data or data obtained by encrypting the target data, to or from each other via the predetermined network, while the encryption units included in the communication devices and auxiliary encryption units included in all the auxiliary communication devices encrypt the data one after another, the auxiliary communication devices being communicable with each other via the network, and each including the auxiliary encryption unit capable of encrypting predetermined data in a decryptable manner according to a method that is different from methods of the other auxiliary communication devices and is also different from the methods of the encryption units of the communication devices.

3. The method according to claim 2,
wherein in the sharing step, all the communication devices and at least one of the auxiliary communication devices share the target data encrypted by all the encryption units of the communication devices, by transmitting and receiving the data via the network.

4. The method according to claim 1, further comprising
a recording step of causing one of the communication devices to transmit the target data encrypted by all the encryption units of the communication devices to a recording device that is connected to the network and is capable of recording data, and causing the recording device to record the target data encrypted by all the encryption units of the communication devices.

5. The method according to claim 3, further comprising
a recording step of causing the communication devices, and one or more of the auxiliary communication devices that hold the target data encrypted by the encryption units included in the communication devices and the auxiliary encryption units included in all the auxiliary communication devices, to transmit the target data encrypted by the encryption units included in the communication devices and the auxiliary encryption units included in all the auxiliary communication devices, to the recording device that is connected to the network and is capable of recording data, and causing the recording device to record the target data encrypted by the encryption units included in the communication devices and the auxiliary encryption units included in all the auxiliary communication devices.

6. The method according to claim 4,
wherein the target data that is encrypted by all the encryption units of the communication devices and is recorded in the recording device by the recording step is set into a state of being disclosed to the devices connected to the network.

7. The method according to claim 5,
wherein the target data encrypted by the encryption units included in the communication devices and the auxiliary encryption units included in all the auxiliary communication devices by the recording step is set into a state of being disclosed to the devices connected to the network.

8. A method executed by a communication system comprising a first communication device including a first encryption unit capable of encrypting predetermined data in a decryptable manner, and a second communication device including a second encryption unit capable of encrypting predetermined data in a decryptable manner according to a method that is different from a method of the first encryption unit, the first communication device and the second communication device being communicable with each other via a predetermined network, the method comprising:
a first encryption step of causing the first communication device to encrypt, through the first encryption unit, target data that is data both of users of the first communication device and the second communication device intend to save, and to generate first encryption target data;
a first transmission step of causing the first communication device to transmit the first encryption target data to the second communication device via the network;
a first reception step of causing the second communication device to receive the first encryption target data from the first communication device via the network;
a second encryption step of causing the second communication device to encrypt the first encryption target data through the second encryption unit, and to generate second first encryption target data;
a second transmission step of causing the second communication device to transmit the second first encryption target data to the first communication device via the network; and
a second reception step of causing the first communication device to receive the second first encryption target data from the second communication device via the network.

9. A method executed by a first communication device in a communication system comprising the first communication device including a first encryption unit capable of encrypting predetermined data in a decryptable manner, and a second communication device including a second encryption unit capable of encrypting predetermined data in a decryptable manner according to a method that is different from a method of the first encryption unit, the first communication device and the second communication device being communicable with each other via a predetermined network, the method comprising:
a first encryption step of encrypting, through the first encryption unit, target data that is data both of users of the first communication device and the second communication device intend to save, and generating first encryption target data;
a first transmission step of transmitting the first encryption target data to the second communication device via the network; and
a second reception step of receiving second first encryption target data from the second communication device via the network, the second first encryption target data being generated by the second communication device encrypting, through the second encryption unit, the first encryption target data received from the first communication device via the network,
the steps being executed by the first communication device.

10. The method according to claim 9,
wherein the first communication device automatically executes the first encryption step, the first transmission step, and the second reception step.

11. The method according to claim 9 or 10, further comprising
a step of causing the first communication device to transmit the second first encryption target data to a recording device that is connected to the network and is capable of recording data, and causing the recording device to record the second first encryption target data.

12. A method executed by a second communication device in a communication system comprising the first communication device including a first encryption unit capable of encrypting predetermined data in a decryptable manner, and a second communication device including a second encryption unit capable of encrypting predetermined data in a decryptable manner according to a method that is different from a method of the first encryption unit, the first communication device and the second communication device being communicable with each other via a predetermined network, the method comprising:
a first reception step of receiving first encryption target data from the first communication device via the network, the first encryption target data being generated by the first communication device encrypting, through the first encryption unit, target data that is data both of users of the first communication device and the second communication device intend to save;
a second encryption step of encrypting the first encryption target data through the second encryption unit, and generating second first encryption target data; and
a second transmission step of transmitting the second first encryption target data to the first communication device via the network,
the steps being executed by the second communication device.

13. The method according to claim 12,
wherein the second communication device automatically executes the first reception step, the second encryption step, and the second transmission step.

14. The method according to claim 12 or 13, further comprising
a step of causing the second communication device to transmit the second first encryption target data to a recording device that is connected to the network and is capable of recording data, and causing the recording device to record the second first encryption target data.

15. A first communication device in a communication system that includes the first communication device, and a second communication device including a second encryption unit capable of encrypting predetermined data in a decryptable manner, the devices being communicable with each other via a predetermined network, the first communication device comprising:
a first encryption unit that encrypts target data by a method different from a method of the second encryption unit, and generates first encryption target data, the target data being data both of users of the first communication device and the second communication device intend to save;
a first transmission unit of transmitting the first encryption target data to the second communication device via the network; and
a first reception unit that receives second first encryption target data from the second communication device via the network, the second first encryption target data being generated by the second communication device encrypting, through the second encryption unit, the first encryption target data received from the first communication device via the network.

16. A second communication device in a communication system that includes a first communication device including a first encryption unit capable of encrypting predetermined data in a decryptable manner, and a second communication device, the devices being communicable with each other via a predetermined network, the second communication device comprising:
a second reception unit that receives first encryption target data from the first communication device via the network, the first encryption target data being generated by the first communication device encrypting, through the first encryption unit, target data that is data both of users of the first communication device and the second communication device intend to save;
a second encryption unit that encrypts the first encryption target data by a method different from a method of the first encryption unit, and generates second first encryption target data; and
a second transmission unit that transmits the second first encryption target data to the first communication device via the network.

17. A computer program for causing a predetermined computer to function as a first communication device in a communication system that includes the first communication device, and a second communication device including a second encryption unit capable of encrypting predetermined data in a decryptable manner, the devices being communicable with each other via a predetermined network, the computer program causing the computer to function as:
a first encryption unit that encrypts target data by a method different from a method of the second encryption unit, and generates first encryption target data, the target data being data both of users of the first communication device and the second communication device intend to save;
a first transmission unit of transmitting the first encryption target data to the second communication device via the network; and
a first reception unit that receives second first encryption target data from the second communication device via the network, the second first encryption target data being generated by the second communication device encrypting, through the second encryption unit, the first encryption target data received from the first communication device via the network.

18. A computer program for causing a predetermined computer to function as a second communication device in a communication system that includes a first communication device including a first encryption unit capable of encrypting predetermined data in a decryptable manner, and a second communication device, the devices being communicable with each other via a predetermined network, the computer program causing the computer to function as:
a second reception unit that receives first encryption target data from the first communication device via the network, the first encryption target data being generated by the first communication device encrypting, through the first encryption unit, target data that is data both of users of the first communication device and the second communication device intend to save together;
a second encryption unit that encrypts the first encryption target data by a method different from a method of the first encryption unit, and generates second first encryption target data; and
a second transmission unit that transmits the second first encryption target data to the first communication device via the network.

19. The method according to claim 4,
wherein encryption target data that is the target data encrypted by all the encryption units of the communication devices is recorded in the recording device in a state of being included in a block that is an aggregation of data items and is connected to an immediately previous block thereof, the blocks each including an operation value that is a value obtained by applying a predetermined arithmetic operation to the immediately previous block, and
in the recording step, the communication device that transmits the encryption target data to the recording device generates the block including the encryption target data that is to be transmitted, and transmits the block to the recording device.

20. The method according to claim 5,
wherein in the communication devices and the auxiliary communication devices, encryption target data that is the target data encrypted by the encryption units included in the communication devices and the auxiliary encryption units included in all the auxiliary communication devices is recorded in the recording device in a state of being included in a block that is an aggregation of data items and is connected to an immediately previous block thereof, the blocks each including an operation value that is a value obtained by applying a predetermined arithmetic operation to the immediately previous block, and
in the recording step, the communication device or the auxiliary communication device that transmits the encryption target data to the recording device generates the block including the encryption target data that is to be transmitted, and transmits the block to the recording device.

21. The method according to claim 4,
wherein encryption target data that is the target data encrypted by all the encryption units of the communication devices is recorded in the recording device in a state of being included in a block that is an aggregation of data items and is connected to an immediately previous block thereof, the blocks each including an operation value that is a value obtained by applying a predetermined arithmetic operation to the immediately previous block, and
in the recording step, the recording device generates the block, based on the encryption target data received from the communication device, and connects the block to the immediately previous block.

22. The method according to claim 5,
wherein in the communication devices and the auxiliary communication devices, encryption target data that is the target data encrypted by the encryption units included in the communication devices and the auxiliary encryption units included in all the auxiliary communication devices is recorded in the recording device in a state of being included in a block that is an aggregation of data items and is connected to an immediately previous block thereof, the blocks each including an operation value that is a value obtained by applying a predetermined arithmetic operation to the immediately previous block, and
in the recording step, the recording device generates the block, based on the encryption target data received from the communication device or the auxiliary communication device, and connects the block to the immediately previous block.

23. The method according to claim 21 or 22,
wherein the number of the encryption target data items included in the one block is one or more, and
in the recording step, at predetermined timing after receiving one or more of the encryption target data items from the communication device, the recording device generates the block including the one or more encryption target data items received after generation of the immediately previous block, and connects the block to the immediately previous block.

24. The method according to claim 4,
wherein in the recording step, the communication device transmits, to the recording device, encryption target data that is the target data encrypted by all the encryption units of the communication devices, and the target data that is an origin of the encryption target data, and
the recording device records the encryption target data, and the target data that is the origin thereof, in a state of being associated with each other.

25. The method according to claim 5,
wherein in the recording step, the communication device or the auxiliary communication device transmits, to the recording device, encryption target data that is the target data encrypted by all the encryption units of the communication devices and the auxiliary communication devices, and the target data that is an origin of the encryption target data, and
the recording device records the encryption target data, and the target data that is the origin thereof, in a state of being associated with each other.

26. The method according to claim 19,
wherein the block includes the encryption target data, the target data that is an origin of the encryption target data, and the operation value, and
in the recording step, the communication device that transmits the encryption target data to the recording device generates the block including the encryption target data that is to be transmitted and the target data that is the origin thereof, and transmits the block to the recording device.

27. The method according to claim 20,
wherein the block includes the encryption target data, the target data that is an origin of the encryption target data, and the operation value, and
in the recording step, the communication device or the auxiliary communication device that transmits the encryption target data to the recording device generates the block including the encryption target data that is to be transmitted and the target data that is the origin thereof, and transmits the block to the recording device.

28. The method according to claim 21,
wherein the block includes the encryption target data, the target data that is the origin of the encryption target data, and the operation value, in a state where the encryption target data and the target data that is the origin thereof are associated with each other, and
in the recording step, the recording device generates the block, based on the encryption target data received from the communication device and the target data that is the origin thereof, and connects the block to the immediately previous block.

29. The method according to claim 22,
wherein the block includes the encryption target data, the target data that is the origin of the encryption target data, and the operation value, in a state where the encryption target data and the target data that is the origin thereof are associated with each other, and
in the recording step, the recording device generates the block, based on the encryption target data received from the communication device or the auxiliary communication device and the target data that is the origin thereof, and connects the block to the immediately previous block.

30. The method according to claim 11,
wherein the second first encryption target data is a block that is an aggregation of data items, and is configured to be recorded in the recording device in a state of being included in what is connected to an immediately previous block thereof, the blocks each including an operation value that is a value obtained by applying a predetermined arithmetic operation to the immediately previous block, and
the first communication device generates the block including the second first encryption target data to be transmitted, and transmits the block to the recording device.

31. A method executed by the recording device subsequent to the method according to claim 11,
wherein the second first encryption target data is a recorded in the recording device in a state of being included in a block that is an aggregation of data items and is connected to an immediately previous block thereof, the blocks each including an operation value that is a value obtained by applying a predetermined arithmetic operation to the immediately previous block, and
the recording device generates the block, based on the second first encryption target data received from the first communication device, and connects the block to the immediately previous block.

32. The method according to claim 31,
wherein the number of the second first encryption target data items included in the one block is one or more, and
at predetermined timing after receiving one or more of the second first encryption target data items from the first communication device, the recording device generates the block including the one or more second first encryption target data items received after generation of the immediately previous block, and connects the block to the immediately previous block.

33. The method according to claim 11,
wherein the first communication device transmits the second first encryption target data, and the target data that is an origin of the second first encryption target data, to the recording device, and
the recording device records the second first encryption target data, and the target data that is the origin thereof, in a state of being associated with each other.

34. The method according to claim 30,
wherein the block includes the second first encryption target data, the target data that is an origin of the second first encryption target data, and the operation value, and
the first communication device generates the block including the second first encryption target data that is to be transmitted and the target data that is the origin thereof, and transmits the block to the recording device.

35. The method according to claim 31,
wherein the block includes the second first encryption target data, the target data that is the origin of the second first encryption target data, and the operation value, in a state where the second first encryption target data and the target data are associated with each other, and
the recording device generates the block, based on the second first encryption target data received from the first communication device and the target data that is the origin thereof, and connects the block to the immediately previous block.

36. The method according to claim 14,
wherein the second first encryption target data is recorded in the recording device in a state of being included in a block that is an aggregation of data items and is connected to an immediately previous block thereof, the blocks each including an operation value that is a value obtained by applying a predetermined arithmetic operation to the immediately previous block, and
the second communication device generates the block including the second first encryption target data to be transmitted, and transmits the block to the recording device.

37. A method executed by the recording device subsequent to the method according to claim 14,
wherein the second first encryption target data is recorded in the recording device in a state of being included in a block that is an aggregation of data items and is connected to an immediately previous block thereof, the blocks each including an operation value that is a value obtained by applying a predetermined arithmetic operation to the immediately previous block, and
the recording device generates the block, based on the second first encryption target data received from the second communication device, and connects the block to the immediately previous block.

38. The method according to claim 37,
wherein the number of the second first encryption target data items included in the one block is one or more, and
at predetermined timing after receiving one or more of the second first encryption target data items from the second communication device, the recording device generates the block including the one or more second first encryption target data items received after generation of the immediately previous block, and connects the block to the immediately previous block.

39. The method according to claim 14,
wherein the second communication device transmits the second first encryption target data, and the target data that is an origin of the second first encryption target data, to the recording device, and
the recording device records the second first encryption target data, and the target data that is the origin thereof, in a state of being associated with each other.

40. The method according to claim 36,
wherein the block includes the second first encryption target data, the target data that is an origin of the second first encryption target data, and the operation value, and
the second communication device generates the block including the second first encryption target data that is to be transmitted and the target data that is the origin thereof, and transmits the block to the recording device.

41. The method according to claim 37,
wherein the block includes the second first encryption target data, the target data that is the origin of the second first encryption target data, and the operation value, in a state where the second first encryption target data and the target data are associated with each other, and
the recording device generates the block, based on the second first encryption target data received from the second communication device and the target data that is the origin thereof, and connects the block to the immediately previous block.
